# EUROPÄISCHE PATENTSCHRIFT

(11) **EP 3 507 487 B1**
(45) Veröffentlichungstag und Bekanntmachung des Hinweises auf die Patenterteilung: **15.02.2023**
(21) Anmeldenummer: 17733401.8
(22) Anmeldetag: 19.06.2017
(51) Int. Cl.: F03D 7/02, F03D 1/06, F03D 80/30

(54) **AKTUATOREINRICHTUNG FÜR EINE WINDENERGIEANLAGE, WINDENERGIEANLAGE UND MONTAGEVERFAHREN**
ACTUATOR DEVICE FOR A WIND TURBINE, WIND TURBINE AND METHOD OF ASSEMBLY
DISPOSITIF ACTIONNEUR POUR UNE ÉOLIENNE, ÉOLIENNE ET PROCÉDÉ DE MONTAGE

(30) Priorität: 30.08.2016 DE 102016116138
(43) Veröffentlichungstag der Anmeldung: 10.07.2019
(73) Patentinhaber: Wobben Properties GmbH, 26607 Aurich (DE)
(72) Erfinder: ALTMIKUS, Andree, 26605 Aurich (DE)
(74) Vertreter: Eisenführ Speiser
(86) Internationale Anmeldenummer: PCT/EP2017/064933
(87) Internationale Veröffentlichungsnummer: WO 2018/041433

(56) Entgegenhaltungen:
- USAKI KEITA ET AL: "Light driven SMA actuator using optical waveguide made of past type organic material", 2014 INTERNATIONAL SYMPOSIUM ON MICRO-NANOMECHATRONICS AND HUMAN SCIENCE (MHS), IEEE, 10. November 2014 (2014-11-10), Seiten 1-6, XP032718634, DOI: 10.1109/MHS.2014.7006065 [gefunden am 2015-01-09]

## Beschreibung

Die folgende Erfindung betrifft eine Aktuatoreinrichtung für eine Windenergieanlage, insbesondere für ein Windenergieanlagenrotorblatt, eine Windenergieanlage mit dieser Aktuatoreinrichtung sowie ein Montageverfahren zum Montieren einer Aktuatoreinrichtung.

Aktoren oder Aktuatoren setzen Signale in mechanische Bewegung oder andere physikalische Größen, wie beispielsweise Druck, Temperatur, et cetera, um. Die Signale werden häufig über elektrische Leitungen übertragen. Bekannte Aktuatoren sind beispielsweise Bimetallaktuatoren, Hydraulik- oder Pneumatikaktuatoren, Piezoaktoren, um nur wenige zu nennen.

In dem Einsatz in Windenergieanlagen, insbesondere in Windenergieanlagenrotorblättern, steuern Aktuatoren beispielsweise den Auftrieb, in dem sie Rotorblattklappen steuern und/oder eine Verdrilling des Rotorblattes selbst verursachen. Ein Nachteil der bekannten Aktuatoreinrichtungen für Windenergieanlagen ist die mit den elektrischen Leitungen verbundene Anfälligkeit für Blitzschläge. Wünschenswert wäre daher, eine Aktuatorik für Windenergieanlagenrotorblätter bereitzustellen, die eine geringere Gefahr von Blitzschlägen mit sich bringen.

Vor diesem Hintergrund war es somit eine Aufgabe der vorliegenden Erfindung, eine Aktuatoreinrichtung für eine Windenergieanlage, eine Windenergieanlage mit dieser Aktuatoreinrichtung und ein Montageverfahren zum Montieren einer Aktuatoreinrichtung bereitzustellen, die eine höhere Betriebssicherheit gewährleisten.

In einem Aspekt wird eine Aktuatoreinrichtung für eine Windenergieanlage, insbesondere für ein Windenergieanlagen-Rotorblatt, mit einer Aktuatorkomponente und einer Steuerungskomponente bereitgestellt. Die Aktuatorkomponente weist wenigstens eine Aktuatorschicht mit einer Vorzugsrichtung und im Wesentlichen parallel zu der Aktuatorschicht wenigstens eine anregende Schicht auf. Die Aktuatorschicht umfasst einen Photoaktuator, wobei der Photoaktuator dazu eingerichtet ist, basierend auf Anregungslicht eine Dehnung und/oder Spannung der Aktuatorschicht in der Vorzugsrichtung zu verändern. Die anregende Schicht ist dazu eingerichtet, Anregungslicht in die Aktuatorschicht zu leiten. Die Steuerungskomponente umfasst eine Lichtquelle und einen Lichtleiter, wobei die Lichtquelle von der anregenden Schicht entfernt angeordnet ist und mittels des Lichtleiters mit der anregenden Schicht verbunden ist.

Ein Photoaktuator weist die Eigenschaft auf, eintreffendes Licht direkt in mechanische Bewegung umzusetzen, ohne das Licht beispielsweise zunächst in elektrische Energie umzuwandeln. Die Verwendung eines Photoaktuators ermöglicht somit, die bei lichtgesteuerten Aktuatoren gewöhnlicher Weise benötigten zwei Umwandlungsvorgänge, nämlich zunächst die Lichtenergie in elektrische Energie und anschließend die elektrische Energie in mechanische Energie, zu vereinfachen.

Indem die Steuerungskomponente einen Lichtleiter aufweist, der die Lichtquelle mit der anregenden Schicht verbindet, ist es möglich, die Aktuatorkomponente ohne elektrische Verbindungsleitungen, bzw. elektrisch leitende Komponenten bereitzustellen. Das durch den Lichtleiter geleitete Licht der Lichtquelle beeinflusst den Photoaktuator, der das eintreffende Anregungslicht direkt in Dehnung und/oder Spannung der Aktuatorschicht umsetzt.

In einer Ausführungsform umfasst der Photoaktuator wenigstens einen photostriktiven Aktuator und/oder einen photomechanischen Aktuator.

Photostriktion ist die direkte Umwandlung von eingestrahltem Licht in Dehnung. Photomechanische Aktuatoren erzeugen ganz allgemein, unabhängig von Dehnung, mechanische Bewegung als Reaktion auf Einstrahlung von Licht. Dabei umfassen photomechanische Aktuatoren auch diejenigen, die auf sekundären Effekten der Lichteinstrahlung, wie beispielsweise der Erwärmung, beruhen.

Der Photoaktuator ist vorzugsweise derart beschaffen, dass die Anregung des Photoaktuators direkt als primärer Effekt durch das anregende Licht ausgelöst wird. Zusätzlich oder alternativ können sekundäre Effekte, beispielsweise durch thermische Erwärmung aufgrund des eintreffenden Lichtes, als Anregung des Photoaktuators zum Verrichten mechanischer Arbeit, beispielsweise zum Verändern einer Dehnung und/oder Spannung in Vorzugsrichtung, ausnutzbar sein.

In einer Ausführungsform umfasst der photomechanische Aktuator einen Aktuator aus wenigstens einer der folgenden Gruppen: a) polarisierte photomechanische Aktuatoren, b) flüssigkristallbasierte photomechanische Aktuatoren, c) auf optothermalen Übergängen basierende photomechanische Aktuatoren, d) ladungsinduzierte photomechanische Aktuatoren und e) auf Strahlungsdruck basierende photomechanische Aktuatoren.

Polarisierte photomechanische Aktuatoren sind optomechanische Aktuatoren, die bei Einstrahlung polarisierten Lichtes eine lichtinduzierte mechanische Deformation zeigen. Ein Beispiel eines Materials, das einen solchen Effekt zeigt, ist ein Glas, also ein amorpher Feststoff, der ein oder mehrere Elemente aus der Gruppe der Chalkogene aufweist. Flüssigkeitskristallbasierte photomechanische Aktuatoren wurden beispielsweise bereits für nematische Elastomere gezeigt. Beispielsweise konnte für Polymernetzwerke, die Azobenzol-flüssigkristalline Bruchteile enthalten, gezeigt werden, dass die nematische Ordnung durch optomechanische Aktuation unterdrückt, bzw. wiederhergestellt werden kann. Das heißt, optische Einstrahlung kann beispielsweise die Azobenzol-Polymerfilme aufgrund der flüssigkristallinen Ordnung verformen.

Optothermische Übergänge sind im Wesentlichen das direkte optische Äquivalent zu elektrothermischen Übergängen, und beruhen darauf, dass Teile der Energie des Anregungslichtes durch das Medium absorbiert und in thermische Energie umgewandelt wird. Im Allgemeinen werden Photoaktuatoren neben den anderen photoaktuatorischen Effekten auch zumindest immer einen Anteil an auf optothermalen Übergängen basierender Aktuatorik aufweisen.

Bei ladungsinduzierten photomechanischen Aktuatoren werden Photonen in einem Halbleiter absorbiert, freie Elektronen aus dem Valenzband in das Leitungsband angeregt und damit Löcher in dem Gitter hinterlassen, welche eine lokale mechanische Dehnung in dem Material verursachen.

Auf Strahlungsdruck basierende photomechanische Aktuatoren basieren auf dem Impulsübertrag zwischen Licht und Aktuatorstruktur. Diese physikalischen Prinzipien sind nur einige der möglichen, die einen erfindungsgemäßen Photoaktuator zur Veränderung einer Dehnung und/oder Spannung der Aktuatorschicht veranlassen. Weitere mögliche Effekte sind vorstellbar, beispielsweise kann der Photoaktuator ein Formgedächtnispolymer, das optisch aktiviert wird, oder eine Nanostruktur, die aus lokaler Ungleichverteilung Photonen erzeugter Ladungen Spannungen aufweist, umfassen.

In einer Ausführungsform umfasst der Photoaktuator wenigstens ein Material gehörend zu einer der folgenden Gruppen:
- Flüssigkristalline Materialien, insbesondere Flüssigkristall-Elastomere
- Photosiomerisierbare organische Verbindungen, speziell Azoverbindungen, z.B. Azobenzen, sowie photochrome organische Verbindungen, bei denen der photochrome Farbwechsel mit einer Isomerisierung von einem Isomer mit geöffnetem Ring zu einem Isomer mit geschlossenem Ring verbunden ist, z.B. Fulgide, Hexatriene, Diarylethene, Dithienylcyclopentene, bevorzugt photochrome Diarylethene, insbesondere photochrome Diarylethene-Einkristalle, oder Co-Kristalle photochromer Diarylethene, z.B. 1,2-bis(2-methyl-5-(1-naphthyl)-3-thienyl)perfluoro-cyclopenten, mit Verbindungen umfassend perfluorierte kondensierte Ringsysteme, z.B. Perfluoronaphthalin, insbesondere Co-Kristalle von 1,2-bis(2-methyl-5-(1-naphthyl)-3-thienyl)perfluoro-cyclopentene mit Perfluoro-naphthalin
- Spin-Crossover-Materialien, insbesondere Spin-Crossover-Komplexe, z.B. solche [Fe(L){M(CN)4}]-Gerüst, worin L ein Ligand ist, z.B. eine heteroaromatische Verbindung mit mindestens einem Stickstoffatom in der aromatischen Ringstruktur, z. B. Pyrazin oder 3-Cyano-Pyridin, und M ein Metall ist, z.B. Pt oder Au, z.B. {Fe(3-CNpy)[Au(CN_{)2]2}}*2/3H2O.
- Kohlenstoff-Nanoobjekte, insbesondere Kohlenstoff-Nanoröhren (einwandig und mehrwandig), Kohlenstoff-Nanofasern und Graphen,
- Nano-Verbundwerkstoffe (nano-composites) umfassend Kohlenstoff-Nanoröhren (carbon nanotubes) insbesondere mehrwandige Kohlenstoff-Nanoröhren (multiwalled carbon nanotubes MWCNT) und/oder Graphene, in einer Matrix, vorzugsweise einer elastischen Matrix, insbesondere einer elastischen Polymermatrix, z.B. einer Matrix umfassend Polydimethylsiloxan PDMS oder einer Matrix umfassend Flüssigkristall-Elastomere, oder einer Matrix umfassend ein Formgedächtnis-Polymer
- Schicht-Verbundwerkstoffe umfassend einen Film aus Kohlenstoff-Nanoröhren verbunden mit einem Elastomerfilm, z. B einem Film enthaltend ein Acryl-Elastomer
- photoresponsive Polymere, z.B. in Form lichtempfindlicher Hydrogele, insbesondere Hydrogele aus kovalent vernetzten Copolymer-Netzwerken aus einem thermoresponsiven Polymer und einem Chromophor
- Biologische photoresoponsive Moleküle, z.B. photoresponsive Proteine, z.B Bacteriorhodopsin
- Chalcogenid-Gläser, z.B. As₅₀Se₅₀
- Ferroelektrische Materialien, z.B. ferroelektrische Einkristalle, und ferroelektrische polykristalline Materialien, z.B. polarisierte ferroelektrische Keramik, z.B. Lanthanium-modifizierte Bleizirconat-titanat (PLZT). und dotiertes Lanthanummodifiziertes Bleizirconattitanat, z.B. mit WO₃ dotierte Lanthanium-modifizierte Bleizirconattitanat
- Polare Halbleiter
- Rotaxane
- optisch aktivierbare Piezokristalle.

Die Verwendung dieser und weiterer Materialien als Photoaktoren ist, nur um ein paar Beispiele zu nennen, aus dem Buch "Optical Nano and Micro Actuator Technology" (CRC Press 2012), aus den Veröffentlichungen Iwaso et. al, "Fast response dry-type artificial molecular muscles with [c2]daisy chains", Nature Chemistry, Vol. 9, June 2016, 625-631 doi: 10.1038/NCHEM.2513; Shepherd, H. J. et al. "Molecular actuators driven by cooperative spin-state switching" Nat. Commun. 4:2607 doi: 10.1038/ncomms3607 (2013) und Morimoto et. al, "A Diarylethene Cocrystal that Converts Light into Mechanical Work", Journal of American Chemical Society 2010, 132, 14172-14178, bekannt.

DE 10 2008 037 447 A1 beschreibt ein Windenergieanlagenblatt (20), welches einen Sensor enthält, der stromaufwärts von einer Hinterkante des Blattes angeordnet ist, zum Erfassen einer Eigenschaft des Luftstroms nahe bei der Oberfläche des Blattes und einen Aktuator, der stromabwärts von dem Sensor angeordnet ist, zum Einstellen des Luftstroms als Reaktion auf die gemessene Eigenschaft.

DE 10 2010 006 544 B4 offenbart ein Rotorblatt, insbesondere für eine Windenergieanlage, das mindestens einen Massenaktor aufweist, der einen Aktor und eine Masse aufweist, und wobei die Masse in einer Pendelbewegung linear oder bogenformig bewegbar ist, dadurch gekennzeichnet, dass der Massenaktor mit einem Sensor und einem Regler (9) als selbststandig handhabbare Einheit ausgebildet ist.

EP 2 899 395 B1 offenbart ein Windturbinenblatt umfassend einen verformbaren Hinterkantenbschnitt, der sich in einer Sehnenrichtung und einer Spannweitenrichtung erstreckt, wobei der verformbare Hinterkantenabschnitt in einem Ansaugseitenunterabschnitt und einem Druckseitenunterabschnitt durch einen oder mehrere Schlitze geteilt ist, wobei der verformbare Hinterkantenabschnitt einen oder mehrere Aktoren umfasst, die auf mindestens einen von den der Ansaugseite bzw. der Druckseite entsprechenden Unterabschnitten wirkt, und wobei die Schlitze konfiguriert sind, um eine Gleitbewegung der Unterabschnitte bezüglich einander oder bezüglich einer zwischen den Unterabschnitten angeordneten Zwischenstruktur zu ermöglichen, und die der Ansaugseite bzw. der Druckseite entsprechenden Unterabschnitte und die Aktoren derart angeordnet sind, dass die Verformung von einem der Unterabschnitte mit einer im Wesentlichen entsprechenden Verformung des anderen Unterabschnitts in Zusammenhang steht.

EP 2 495 434 B1 betrifft ein System zur Überwachung des Zustands von Rotorblättern an Windenergieanlagen. Bei dem System sind mehrere Sensorknoten an einem Rotorblatt befestigt oder im Rotorblatt integriert. An den einzelnen Sensorknoten ist jeweils mindestens ein Sensor zur ortsaufgelösten Erfassung von Schwingungen und/oder akustischen Wellen des Rotorblatts vorhanden und die Sensorknoten sind über Lichtleitfasern mit einer zentralen Versorgungs- und Empfangseinheit verbunden. An der zentralen Versorgungs- und Empfangseinheit ist eine Lichtquelle vorhanden, von der elektromagnetische Strahlung über eine Lichtleitfaser zu einem photovoltaischem Konverter, mit dem die empfangene elektromagnetische Strahlung in elektrische Energie umgewandelt wird, geführt ist.

DE 10 2013 006 166 A1 betrifft eine formvariable, fluidisch aktuierte Hinterkante an aerodynamischen Profilen von Rotorblättern von Windenergieanlagen, welche eine Grundstruktur, vorzugsweise mit jeweils einer flexiblen Ober- und Unterseite, sowie mindestens ein, die genannte Grundstruktur bewegendes, fluidisch, vorzugsweise pneumatisch, betriebenes Aktuatorelement umfasst, dadurch gekennzeichnet, dass das Aktuatorelement seine Ausdehnung faltenbalgähnlich durch das Falten seiner Wandung verändert, diese Wandung örtlich den Verlauf der Profilaußenkontur gestaltet und vorzugsweise in der Hüllkurve des zugrundeliegenden aerodynamischen Profils liegt sowie diese Wandung die Abdichtung des Profilinnenraums gegenüber der Umgebung des Profils zwischen beweglichem und festem Teil des Profils bildet.

DE 197 12 034 A1 umfasst eine Profilkante eines aerodynamischen Profils, wobei die Profilkante auf ihrer Außen - und/ oder Innenseite oder in ihrer Struktur multifunktionales Material aufweist.

EP 3 128 169 A1 betrifft eine Aktuatoranordnung zum Bewegen einer aerodynamischen Vorrichtung relativ zu einem Rotorblatt einer Windturbine, wobei die Aktuatoranordnung aufweist: einen Befestigungsabschnitt, der angeordnet und vorbereitet ist zur Befestigung der Aktuatoranordnung am Hinterkantenabschnitt des Rotorblattes; einen Verbindungsabschnitt, der zum Verbinden der aerodynamischen Vorrichtung mit der Aktuatoranordnung angeordnet und vorbereitet ist; einen Scharnierabschnitt, der den Befestigungsabschnitt und den Verbindungsabschnitt verbindet, wobei der Scharnierabschnitt eine Relativbewegung des Verbindungsabschnitts in Bezug auf den Befestigungsabschnitt um sich herum ermöglicht eine Drehachse, die im wesentlichen in Spannweitenrichtung des Rotorblatts orientiert ist; und einen pneumatischen Aktuator zum Induzieren der Drehbewegung des Verbindungsabschnitts relativ zum Befestigungsabschnitt, wobei die Bewegung eine reversible Bewegung ist. Die Aktuatoranordnung ist dadurch gekennzeichnet, dass sie zum lösbaren Verbinden der aerodynamischen Vorrichtung mit dem Verbindungsabschnitt angeordnet und vorbereitet ist. Weiterhin betrifft die Erfindung eine bewegliche Hinterkantenanordnung (40) mit einer solchen Aktuatoranordnung und einer aerodynamischen Einrichtung. Schließlich betrifft die Erfindung eine Rotorblattanordnung mit einer solchen Aktuatoranordnung und einem Rotorblatt einer Windturbine.

DE 10 2010 047 918 A1 beschreibt verschiedene technische Umsetzungen vom Konzept der pneumatisch betätigten, betriebssicheren flexiblen Hinterkante. Alle in der Erfindung beschriebenen Varianten beruhen auf dem Grundprinzip der Verwendung von pneumatischen Muskeln und entgegenwirkenden mechanischen Energiespeichern, um eine verformbare und elastische aerodynamische Struktur umzulenken. Die erfolgreiche Umsetzung einer solchen Variante ermöglicht es die wirksame Aerodynamik, die Windlasten und die genaue Leistungssteuerung von Rotoren von Windkraftanlagen zu regulieren.

In einer Ausführungsform ist die Aktuatorschicht in wenigstens einer Richtung anisotrop. Nachdem die Aktuatorschicht in wenigstens einer Richtung anisotrop ist, sind nicht alle Eigenschaften der Aktuatorschicht von einer Richtung unabhängig. Insbesondere führt die Anisotropie vorzugsweise dazu, dass der Photoaktuator, bzw. die Aktuatorschicht die Vorzugsrichtung ausbildet.

In einer Ausführungsform weist die Aktuatorschicht einen Faserverbundstoff auf. Ein Faserverbundstoff weist vorzugsweise zwei Hauptkomponenten, nämlich eine bettende Matrix sowie verstärkende Fasern auf. Die Fasern umfassen beispielsweise, ohne darauf beschränkt zu sein, Glasfasern, Kohlenstofffasern, Keramikfasern, etc. Das Material der einbettenden Matrix kann beispielsweise, ohne darauf beschränkt zu sein, Polymere wie Duromere, Elastomere oder Thermoplaste, aber auch andere Elemente wie Zement, Metalle, Keramiken, etc. umfassen. Derartige Werkstoffe sind besonders im Bereich der Windenergieanlagen vorteilhaft einsetzbar.

In einer Ausführungsform ist der Photoaktuator in der Aktuatorschicht in einer Matrix, insbesondere einer Harzmatrix, eingebettet. Mit dem Begriff Harz sind feste bis flüssige organische Stoffe bezeichnet. Insbesondere werden mit Harz Polymere als Grundstoff für Kunststoffe bezeichnet. Mittels einer Matrix können Photoaktuatoren in vorteilhafter Form in der Aktuatorschicht eingebettet werden.

In einer Ausführungsform weist die Aktuatorkomponente mindestens zwei Aktuatorschichten mit mindestens einer, jeweils dazwischenliegenden anregenden Schicht auf.

Die Anordnung in mehreren Schichten ist vergleichbar mit der bekannten Anordnung eines Piezo-Stacks. Wenn die Aktuatorkomponente viele übereinanderliegende Aktuatorschichten aufweist, lässt sich in vorteilhafter Weise eine Vorzugsrichtung in Stapelrichtung realisieren. Der Aktuatorweg ist dann proportional zur Anzahl der Schichten und kann in gewissen Maßen in vorteilhafter Weise skaliert werden.

Die Vorzugsrichtung muss aber nicht in jeder Ausführungsform der Stapelrichtung entsprechen. Insbesondere in dem Fall, in dem die Aktuatorkomponente zwei Aktuatorschichten mit einer dazwischenliegenden anregenden Schicht aufweist, kann die Vorzugsrichtung auch in der Schichtebene der Aktuatorschichten bzw. der anregenden Schicht liegen. Vorzugsweise weisen in diesem Fall die zwei Aktuatorschichten unterschiedliche Reaktionen auf Anregungslicht auf, beispielsweise erfährt die eine anregende Schicht eine Dehnung in Vorzugsrichtung, während die andere anregende Schicht eine Stauchung in Vorzugsrichtung erfährt. Dies resultiert in einer Biegung der Aktuatorkomponente. In anderen Ausführungsformen können die Aktuatorschichten aber auch die gleiche Reaktion zeigen, sodass eine Dehnung der gesamten Aktuatorkomponente in der Vorzugsrichtung in der Schichtebene resultiert.

In weiteren Ausführungsformen können auch mehr als eine anregende Schicht zwischen zwei Aktuatorschichten bereitgestellt werden. In diesem Fall kann unterschiedliches Anregungslicht in die jeweiligen Aktuatorschichten eingeleitet werden.

In einer Ausführungsform ist die Aktorkomponente eingerichtet, mittels Anregungslicht eine Kraft von 10 bis 50 Newton je Quadratmilimeter (N/mm²) Querschnittsfläche der Aktuatorkomponente aufzubringen, wobei die Querschnittsfläche der Aktuatorkomponente senkrecht auf der Vorzugsrichtung ist.

Eine Kraft in Newton je Quadratmillimeter Querschnittsfläche entspricht einem Druck in Megapascal, der Bereich von 10 bis 50 N/mm² ist ein Wert, der für Piezoaktoren weit verbreitet ist und Anwendungen in vielen Bereichen, insbesondere der Windenergieanlagen, ermöglicht.

Vorzugsweise wird die Querschnittsfläche der Aktuatorkomponente senkrecht zu der Vorzugsrichtung als Aktorfläche bezeichnet und wird vorzugsweise als die Fläche der gesamten Aktuatorkomponente, einschließlich Aktuatorschicht und anregender Schicht, bestimmt.

Die Aktorfläche ist somit für einen Stapelaktor vorzugsweise unabhängig von der Anzahl der Schichten und entspricht der Fläche einer der entsprechenden Schichten.

In einer Ausführungsform ist die Aktuatorkomponente als Dehnungsaktuatorkomponente ausgestaltet, wobei eine Dehnungsrichtung der Vorzugsrichtung entspricht, die im Wesentlichen senkrecht auf der wenigstens einen Aktuatorschicht steht, oder die Aktuatorkomponente ist als Biegeaktuatorkomponente ausgestaltet, wobei die Dehnungsrichtung im Wesentlichen senkrecht auf der Vorzugsrichtung der Aktuatorschicht steht.

Dehnungsaktuatorkomponenten ermöglichen eine vorzugsweise lineare mechanische Verformung, wobei diese lineare mechanische Verformung beispielsweise in Bewegung eines anderen Bauteils übersetzbar ist. Vorzugsweise entspricht der stapelartige Aufbau der Aktuatorkomponente einer Dehnungsaktuatorkomponente, wobei der lineare Dehnungsweg in diesem Beispiel der Stapelrichtung entspricht. Eine Dehnungsaktuatorkomponente kann in einer Ausführungsform zur Ansteuerung einer Auftriebsklappe eines Rotorblattes einer Windenergieanlage ausgebildet werden.

Im Unterschied dazu ist eine Biegeaktuatorkomponente eingerichtet, die Aktuatorkomponente in einer Dehnungs- oder Auslenkrichtung senkrecht zu der Vorzugsrichtung zu verbiegen. Die Biegeaktuatorkomponente ist vorzugsweise als flächige Aktuatorkomponente ausgestaltet, die sich über einen größeren Bereich des zu steuernden Bauteils erstreckt. Die Vorzugsrichtung verläuft im Wesentlichen in der Ebene, in der die Aktuatorkomponente ihre flächige Ausdehnung zeigt. Hierbei können in einer Ausführungsform eine oder mehrere in der Ebene liegende Aktuatorschichten und/oder anregende Schichten, wobei die Vorzugsrichtung dann in der Aktuatorschicht liegt, oder in einer anderen Ausführungsform mehrere senkrecht auf der Ebene stehende, gestapelte Schichten, wobei die Vorzugsrichtung dann senkrecht auf der ebene der jeweiligen Aktuatorschichten liegt, aufweisen. Die Biegeaktuatorkomponente weist vorzugsweise eine zu ihren sonstigen Ausmaßen geringe Erstreckung senkrecht zu der Ebene, in der sie ihre flächige Ausdehnung zeigt, auf.

In einer Ausführungsform ist eine derartige Biegeaktuatorkomponente zur Steuerung einer Servoklappe eines Rotorblattes einer Windenergieanlage ausgelegt. Im Gegensatz zu der Dehnungsaktuatorkomponente umfasst der Biegeaktuator zumindest in dem Fall, dass die Schichten parallel zu der Ebene, in der die Biegeaktuatorkomponente ihre flächige Ausdehnung zeigt, angeordnet sind, eine deutlich geringere Anzahl an Aktuatorschichten, bzw. anregenden Schichten, und nimmt bei vergleichbarem Volumen eine größere Fläche ein.

In einer Ausführungsform liegt ein Verhältnis von Aktorfläche zu einem Quadrat einer Referenzlänge der Aktuatorkomponente in einem Bereich von 0,0001 bis 0,01 und insbesondere in dem Fall, dass die Aktuatorkomponente als Dehnungsaktuatorkomponente ausgestaltet ist, in einem Bereich von 0,01 bis 1.

Als eine Referenzlänge der Aktuatorkomponente wird das Verhältnis aus Aktuatorweg und Dehnungsweg bezeichnet. Wird beispielsweise ein Aktuator derart ausgelegt, dass ein Aktuatorweg von 0,1 mm benötigt wird, der eine Dehnung von 0,1 % ermöglicht, ergibt sich daraus eine Referenzlänge von 100 mm. Dies ist natürlich ein Beispiel, und die eigentliche Auslegung des Aktuators kann basierend auf den reellen Anforderungen getroffen werden.

Der Bereich von 0,01 bis 1 für das Verhältnis von Aktorfläche zu einem Quadrat der Referenzlänge entspricht einem Bereich, wie er insbesondere für Auftriebsklappen bei Windenergieanlagen benötigt wird. Der Bereich von 0,0001 bis 0,01 entspricht einem Bereich, wie er insbesondere für die Auslegung von Servoklappen für Windenergieanlagen Anwendung findet.

In einer Ausführungsform liegt eine von der Aktuatorkomponente verrichtbare mechanische Arbeit in einem Bereich von 100 bis 10.000 Joule je Kubikmeter (J/m³) Aktuatorvolumen, wobei die von der Aktuatorkomponente verrichtbare mechanische Arbeit insbesondere in dem Fall, dass die Aktuatorkomponente als Dehnungsaktuatorkomponente ausgestaltet ist, in einem Bereich von 1.000 bis 10.000 Joule je Kubikmeter Aktuatorvolumen oder in dem Fall, dass die Aktuatorkomponente als Biegeaktuatorkomponente ausgestaltet ist, in einem Bereich von 100 bis 1.000 Joule je Kubikmeter Aktuatorvolumen liegt.

Als Aktuatorvolumen wird das Volumen der Aktuatorkomponente bezeichnet, wobei das Aktuatorvolumen vorzugsweise zumindest die Aktuatorschicht und die anregende Schicht umfasst. Die verrichtbare mechanische Arbeit in einem Bereich von 100 bis 10.000 J/m³ ist insbesondere für die eingangs erwähnten Beispiele von Photoaktuatoren möglich und kann je nach Ausgestaltung der Aktuatorkomponente erreicht werden.

Im Allgemeinen liegt die erreichbare Energiedichte bei Flächenaktuatoren um etwa einen Faktor 10 niedriger als für einen Stapelaktuator. Der Bereich von 100 bis 1000 J/m³ Aktuatorvolumen kann vorzugsweise für die Ansteuerung von Servoklappen von Windenergieanlagen verwendet werden. Der Bereich von 1.000 bis 10.000 J/m³ Aktuatorvolumen ist vorzugsweise ausgelegt, eine Auftriebsklappe einer Windenergieanlage anzusteuern.

In einer Ausführungsform ist die Aktuatorkomponente als Biegeaktuatorkomponente ausgestaltet und dazu eingerichtet, sich durch Anregung senkrecht zu der Vorzugsrichtung zu biegen.

Die Biegeaktuatorkomponente ist somit vorzugsweise zum Verbiegen senkrecht zu der Ebene der Vorzugsrichtung ausgelegt. Insbesondere liegt die Vorzugsrichtung in der Ebene, in der die Biegeaktuatorkomponente eine flächige Ausdehnung zeigt, beispielsweise auf einem Substrat bzw. einer Oberfläche eines Bauteils angebracht ist. Dadurch lässt sich eine flächige Aktuatorkomponente auslegen, die direkt eine Verformung der Fläche bewirkt, auf die der Aktuator angebracht ist. Die Biegeaktuatorkomponente entspricht vorzugsweise in ihrem Wirkprinzip einem Bimetallaktor und kann auf ähnliche Weise ausgebildet sein. In einer Ausgestaltung der Biegeaktuatorkomponente liegt die Vorzugsrichtung in der Ebene der Aktuatorschicht, das heißt die eine oder mehreren Aktuatorschichten verlaufen im Wesentlichen parallel zu der Fläche, auf der der Aktuator angebracht ist. In einer anderen Ausgestaltung ist die Biegeaktuatorkomponente aus vielen Schichten aufgebaut, die im Wesentlichen senkrecht auf der Fläche, auf der der Aktuator angebracht ist, verlaufen. In diesem Fall verläuft auch die Vorzugsrichtung im Wesentlichen senkrecht zu den parallelen Ebene der mehreren Aktuatorschichten.

In einer Ausführungsform liegt ein Verhältnis von Höhe der Aktuatorkomponente zu einer Länge der Aktuatorkomponente in Vorzugsrichtung in einem Bereich von 0,001 bis 0,1, insbesondere in einem Bereich von 0,002 bis 0,02.

Die Ebene der Aktuatorschicht spannt sich in dieser Ausführungsform über die Vorzugsrichtung und eine senkrecht darauf stehende Richtung auf. Die von der Aktuatorkomponente zu verrichtende mechanische Arbeit ist proportional zu der Breite der Aktuatorkomponente, die senkrecht auf der Vorzugsrichtung steht. Anders ausgedrückt, ein differentieller Beitrag der Aktuatorkomponente in Breitenrichtung ist konstant und vorzugsweise bereits durch das Verhältnis aus Höhe zu Länge in Vorzugsrichtung bestimmt. Aktuatorkomponenten, bei denen dieses Verhältnis in dem bevorzugten Bereich liegt, eignen sich besonders gut für den Einsatz an Windenergieanlagen-Rotorblättern.

Für das Bespiel einer Servoklappe eines Rotorblattes einer Windenergieanlage kann die Vorzugsrichtung der Richtung des Profils des Rotorblattes entsprechen. Die Servoklappe kann dann beispielsweise in den Bereich der Hinterkante des Windenergieanlagen-Rotorblattes mit einer bestimmten Länge in Richtung der Profilsehne vorgesehen sein. Die zur Ansteuerung der Servoklappe zu verrichtende mechanische Arbeit ist proportional zu der Breite der Klappe in Radiusrichtung des Rotorblattes, d.h. die Arbeit pro Einheit in Breitenrichtung ist über den Radius des Rotorblattes der Windenergieanlage von Nabe zu Blattspitze im Wesentlichen konstant. Beispielsweise kann eine solche Servoklappe eine Breite von einem Meter aufweisen. Da sowohl die von der Aktuatorkomponente verrichtbare mechanische Arbeit als auch die von der Servoklappe geforderte mechanische Arbeit proportional und linear von der Breite des Aktors bzw. der Servoklappe abhängen, ist es ausreichend, die Länge der Aktuatorkomponente und deren Höhe anzugeben. Das Volumen und die damit verrichtbare mechanische Arbeit der Aktuatorkomponente ergeben sich dann durch Multiplikation mit der Länge, die der Länge der Servoklappe entspricht.

In einer Ausführungsform liegt eine Höhe der Aktuatorkomponente senkrecht zu einer Ebene der wenigstens einen Aktuatorschicht in einem Bereich von 1 mm bis 10 mm, bevorzugt in einem Bereich von 3 mm bis 7 mm und besonders bevorzugt von etwa 5 mm.

Vorzugsweise ist der Begriff etwa als Rundungsungenauigkeit zu verstehen, das heißt, der Bereich von 4,5 bis beispielsweise 5,49 mm ist als etwa dem Wert von 5 mm zu verstehen. Eine Höhe der Aktuatorkomponente, die in dem bevorzugten Bereich liegt, erfüllt die Anforderungen besonders für den Einsatz im Bereich von Windenergieanlagen.

In einer Ausführungsform umfasst die anregende Schicht ultradünnes Glas und/oder Polymer, insbesondere mit einer Stärke von 20µm bis 100µm.

Ultradünnes Glas und/oder Polymer ist selbstverständlich nur ein Beispiel für ein Material, das in der anregenden Schicht enthalten sein kann. Auch andere geeignete Materialien sind vorstellbar. Ultradünnes Glas bzw. Polymer ermöglicht vorteilhafterweise, dass die anregende Schicht trotz sehr geringer Dicke die gewünschten Eigenschaften zeigt.

In einer Ausführungsform weist die Aktuatorkomponente eine Verspiegelung auf, die dazu eingerichtet ist, das Anregungslicht zu reflektieren, wobei die Verspiegelung die Aktuatorkomponente an wenigstens einer Seitenfläche zumindest teilweise umgibt, insbesondere die Aktuatorkomponente an der Seite der anregenden Schicht umgibt, die der Aktuatorschicht gegenüberliegt.

Vorzugsweise ist die Verspiegelung auf die Wellenlänge des Anregungslichtes ausgelegt. Aufgrund der Verspiegelung ist es möglich, Lichtverluste beispielsweise dadurch, dass Anregungslicht aus der anregenden Schicht austritt, anstelle in die Aktuatorschicht geleitet zu werden, zu verringern. Somit erhöht sich eine Effizienz der gesamten Aktuatorkomponente.

In einer Ausführungsform ist der Lichtleiter derart angeordnet, Licht in einer Längsrichtung in die anregende Schicht einzuleiten, wobei die Längsrichtung in einer Ebene der anregenden Schicht liegt, wobei die Ebene der anregenden Schicht durch die Längsrichtung und eine Breitenrichtung aufgespannt wird, wobei insbesondere die Vorzugsrichtung in einem Fall, in dem die Aktuatorkomponente als Biegeaktuatorkomponente ausgestaltet ist, im Wesentlichen der Längsrichtung oder einer davon abweichenden Richtung, die in einer Ebene der wenigstens einen Aktuatorschicht liegt, entspricht, oder die Vorzugsrichtung in einem Fall, in dem die Aktuatorkomponente als Dehnungsaktuatorkomponente ausgestaltet ist, im Wesentlichen senkrecht auf der Längsrichtung und/oder der Ebene der wenigstens einen Aktuatorschicht steht.

Dadurch, dass die Längsrichtung in eine Ebene der anregenden Schicht liegt, ist es besonders einfach, Licht mittels des Lichtleiters in die Schicht einzuleiten. In anderen Ausführungsformen kann die Längsrichtung auch als eine Richtung der anregenden Schicht definiert sein, wobei ein oder mehrere Lichtleiter in der Ebene der anregenden Schicht Licht in die anregende Schicht einleiten, wobei die Richtungen, mit denen der oder die Lichtleiter Licht einleiten, nicht unbedingt der Längsrichtung entsprechen.

Vorzugsweise wird in dieser Ausführungsform, abhängig davon, ob die Aktuatorkomponente als Biegeaktuatorkomponente oder als Dehnungsaktuatorkomponente ausgestaltet ist, ein unterschiedlicher Effekt des Photoaktuators ausgenutzt. Vorzugsweise wird nämlich in dem Fall der Biegekomponente ein Transversaleffekt des Photoaktuators und in dem Fall, in dem die Aktuatorkomponente als Dehnungsaktuatorkomponente ausgestaltet ist, ein Longitudinaleffekt des Photoaktuators ausgenutzt. Der Transversaleffekt ist vergleichbar mit dem für Piezoaktoren bekannten Quereffekt, bzw. d31-Effekt und der Longitudinaleffekt ist vergleichbar mit dem Längseffekt, bzw. d33-Effekt. Auch dies sind nur beispielhafte Ausgestaltungen, in anderen Ausführungsformen können auch andere Effekte, beispielsweise ein Schereffekt oder eine Kombination von Transversaleffekt und Longitudinaleffekt, eingesetzt werden.

In einer Ausführungsform weist die Aktuatoreinrichtung weiter einen Verstärkungsrahmen auf, welcher die Aktuatorkomponente umschließt, wobei der Verstärkungsrahmen derart angeordnet ist, dass eine Dehnung der Aktuatorschicht in Vorzugsrichtung zu einer Stauchung des Verstärkungsrahmens senkrecht zu der Vorzugsrichtung führt, wobei der Verstärkungsrahmen zur Übersetzung zwischen der Bewegung in Vorzugsrichtung und im Wesentlichen senkrecht dazu eingerichtet ist.

Ein derartiger Verstärkungsrahmen implementiert mit anderen Worten ein Wegvergrößerungssystem, mit dem ein Aktuatorweg in einen längeren Bewegungsweg übersetzt werden kann. Insbesondere in dem Fall, in dem die Aktuatorkomponente mehrere Schichten aufweist, bzw. als Stapelaktuator ausgebildet ist, können mittels des Verstärkungsrahmens die erreichbaren Stellwege der Aktuatorkomponente derart vergrößert werden, dass sie besonders geeignet für Anwendungen in der Windenergieanlage ist.

Durch die Übersetzung ändert sich die vom Aktuator verrichtbare mechanische Energie nicht. Entsprechend reduziert sich bei einer vergrößerten Wegstrecke die je Wegstrecke aufbringbare Kraft entsprechend. Ein Übersetzungsfaktor eines Verstärkungsrahmens liegt, ohne darauf beschränkt zu sein, in einem Bereich von 2 bis 10, insbesondere bei etwa 5.

In einer Ausführungsform weist die anregende Schicht auf der oder den an die Aktuatorschicht angrenzenden Seiten wenigstens ein Diffusionselement zur diffusen Einleitung von Anregungslicht in die Aktuatorschicht aufweist, wobei das Diffusionselement insbesondere Oberflächenunregelmäßigkeiten, vorzugsweise gelaserte und/oder geätzte Microkavitäten, umfasst.

Vorzugsweise erreicht das Diffusionselement eine gleichmäßige Verteilung des Anregungslichtes in der Aktuatorschicht. In anderen Ausführungsformen kann das Diffusionselement alternativ oder zusätzlich als eigenständige Schicht zwischen anregender Schicht und Aktuatorschicht, bzw. als Teil der Aktuatorschicht ausgebildet sein. Auch andere Diffusionselemente, die nicht basierend auf Oberflächenunregelmäßigkeiten gebildet sind, sind vorstellbar.

In einer Ausführungsform weist die anregende Schicht ein Konversionselement auf, das dazu eingerichtet ist, Licht von der Lichtquelle in Anregungslicht umzuwandeln, wobei das Anregungslicht eine andere Wellenlänge und/oder ein anderes Spektrum als das Licht der Lichtquelle aufweist.

Mittels eines Konversionselementes ist es nicht nötig, dass das Licht der Lichtquelle genau auf den Photoaktuator abgestimmt ist. Somit kann auch in dem Fall, in dem Licht von der Lichtquelle nicht als Anregungslicht geeignet ist, der Photoaktuator angeregt werden, nachdem das Licht durch das Konversionselement in Anregungslicht konvertiert wird.

In einer Ausführungsform weist das Konversionselement ein fluoreszierendes oder ein phosphoreszierendes Material auf. Insbesondere bei Verwendung eines phosphoreszierenden Materials kann somit auch nach dem Abschalten der Bestrahlung der Lichtquelle eine Anregung des Photoaktuators erfolgen. Diese Materialien sind allerdings nur Beispiele, andere Konversionselemente sind denkbar. Auch ist das Konversionselement als Teil der anregenden Schicht lediglich beispielhaft zu verstehen, wobei in anderen Ausführungsformen ein eigenständiges Konversionselement zwischen anregender Schicht und Aktuatorschicht, bzw. das Konversionselement als Teil der Aktuatorschicht ausgebildet sein kann.

In einem weiteren Aspekt wird ein Rotorblatt einer Windenergieanlage mit einer Aktuatoreinrichtung gemäß einer Ausführungsform der Erfindung und einem aktiven Element bereitgestellt, wobei die Aktuatoreinrichtung zur Steuerung des aktiven Elementes eingerichtet ist.

Das Rotorblatt mit einer erfindungsgemäßen Aktuatoreinrichtung ermöglicht somit, dass das aktive Element, das an dem Rotorblatt bereitgestellt ist, gesteuert werden kann, ohne dass es mit elektrischen Leitungen verbunden sein muss. Alle weiteren Vorzüge und Vorteile der genannten Ausführungsformen der erfindungsgemäßen Aktuatoreinrichtung können in gleicher Weise auch auf das Rotorblatt übertragen werden. Das aktive Element umfasst vorzugsweise eine Auftriebsklappe, eine Servoklappe, einen Vortex-Generator oder ein sonstiges aktives Element, mit dem beispielsweise aerodynamische und/oder akustische Eigenschaften des Rotorblattes verändert werden können.

In einer Ausführungsform des Rotorblattes ist die Aktuatorkomponente der Aktuatoreinrichtung als Biegeaktuatorkomponente ausgestaltet und die Klappe ist als Servoklappe ausgestaltet, wobei die Aktuatorkomponente flächig über den Bereich der Servoklappe montiert ist.

Bei einer Servoklappe handelt es sich vorzugsweise um ein formveränderliches aktives Element, das heißt, dass sich die Servoklappe selbst durch Betätigung in ihrer Form ändert, beispielsweise verbiegt. Die Servoklappe ist vorzugsweise in einem Bereich der Blattspitze des Rotorblattes vorgesehen und umfasst einen Bereich von 10 bis 20 % des Rotorblattprofils von der Hinterkante aus betrachtet. Der Bereich der Blattspitze umfasst insbesondere die in radialer Richtung von einer Rotorblattnabe aus betrachteten äußeren 30% der Länge des Rotorblattes, wobei eine Servoklappe eine Länge in Radiusrichtung des Rotorblattes in dem Gatzen Bereich der Blattspitze oder nur in einem Teilbereich, beispielsweise in der Größenordnung von 1 m bis 10 m, vorgesehen sein kann.

Die Aktuatorkraft der Servoklappe muss im Wesentlichen gleich verteilt über den gesamten Bereich der Servoklappe aufgebracht werden. Aus diesem Grund ist es bevorzugt, dass ein möglichst großer Bereich der Servoklappe mit der Aktuatoreinrichtung, die als Biegeaktuator ausgestaltet ist, bedeckt ist. Hierbei muss es sich natürlich nicht um eine einzige flächige Aktuatorkomponente handeln, sondern auch mehrere einzelne Aktuatorkomponenten, die entsprechend Teile der Servoklappe bedecken und jeweils eigenständige Steuerungskomponente aufweisen, sind vorstellbar. Die Servoklappe kann beispielsweise als zentrale Schicht aus einem biegbaren Material, beispielsweise glasfaserverstärkter Kunststoff, ausgestaltet sein, wobei wenigstens eine Biegeaktuatorkomponente auf der Oberseite und/oder der Unterseite der zentralen Schicht ausgebildet ist. Für die Formgebung kann ferner ein elastisches Material über die zentrale Schicht und die Aktuatorkomponente ausgebildet sein.

In einer Ausführungsform des Rotorblattes ist die Aktuatorkomponente der Aktuatoreinrichtung als Dehnungsaktuatorkomponente ausgestaltet und die Klappe ist als Auftriebsklappe ausgestaltet, wobei das Rotorblatt ferner eine Übersetzungseinheit zum Übersetzen der Bewegung der Aktuatorkomponente in eine Steuerung der Auftriebsklappe aufweist.

Eine Auftriebsklappe ist vorzugsweise ein diskretes Bauteil mit beispielsweise 15 bis 50 % Erstreckung in Profiltiefenrichtung. Die Position der Auftriebsklappe wird bezüglich des Rotorblattes mittels der Aktuatoreinrichtung verändert. Beispielsweise wird die Auftriebsklappe gegenüber dem Rotorblatt verdreht, um einen Auftrieb zu erhöhen, bzw. zu verringern. Die Übersetzungseinheit weist in einer Ausführungsform eine Schub-/Zugstange auf, mit der die Aktuatorbewegung wie bei bekannten Auftriebsklappen in eine Bewegung der Auftriebsklappe umgesetzt wird. Nachdem die Aktuatoreinrichtung als Dehnungsaktuatorkomponente ausgestaltet ist, erzeugt die Dehnungsaktuatorkomponente eine lineare Aktuatorbewegung, die von der Übersetzungseinheit einfach übersetzt werden kann.

In einer Ausführungsform des Rotorblattes weist die Aktuatoreinrichtung einen Verstärkungsrahmen auf, welcher die Aktuatorkomponente umschließt, wobei die Übersetzungseinheit eine Schub-/Zugstange zur Kopplung des Verstärkungsrahmens an die Auftriebsklappe aufweist.

In dem die Aktuatoreinrichtung den Verstärkungsrahmen aufweist, kann der möglicherweise kurze Aktuatorweg in eine längere Bewegung des Verstärkungsrahmens übersetzt werden. Typische Übersetzungsverhältnisse, die mit einem derartigen Verstärkungsrahmen erreicht werden können, liegen im Bereich von 2 bis 10, das heißt, dass der Aktuatorweg auf das Zwei- bis Zehnfache verlängert werden kann. Auch andere Übersetzungen sind vorstellbar, beispielsweise können auch mehrere Übersetzungseinrichtungen, beispielsweise Verstärkungsrahmen, in Reihe geschalten werden. Anstelle der Schub-/Zugstange oder zusätzlich dazu können auch weitere Elemente von der Übersetzungseinheit umfasst sein, um die Bewegung der Aktuatorkomponente in die Steuerung der Auftriebsklappe zu übersetzen.

In einer weiteren Ausführungsform weist das Rotorblatt der Windenergieanlage mehrere aktive Elemente auf. Die mehreren aktiven Elemente können beispielsweise mehrere Auftriebsklappen, mehrere Servoklappen, Vortex-Generatoren, oder andere aktive Elemente sein. In einer weiteren Ausführungsform kann auch eine kombinierte Servoklappe und Auftriebsklappe am Rotorblatt bereitgestellt werden. Für das jeweilige aktive Element, bzw. die Kombination der aktiven Elemente, können dann jeweils geeignete Ausgestaltungen der erfindungsgemäßen Aktuatoreinrichtung zum Einsatz kommen.

In einem weiteren Aspekt wird Windenergieanlage mit einem Rotorblatt gemäß einer Ausführungsform der Erfindung bereitgestellt.

In einem weiteren Aspekt wird ein Montageverfahren zum Montieren einer Aktuatoreinrichtung gemäß einer Ausführungsform der Erfindung an einem Rotorblatt gemäß einer Ausführungsform der Erfindung bereitgestellt, wobei das Verfahren ein Anbringen der Aktuatorkomponente an einem Windenergieanlagen-Rotorblatt und/oder ein Verbinden der Steuerungskomponente mit der Aktuatorkomponente umfasst.

Es sollte verstanden werden, dass die Aktuatoreinrichtung nach Anspruch 1, das Rotorblatt nach Anspruch 25, die Windenergieanlage nach Anspruch 26 und das Montageverfahren nach Anspruch 27 ähnliche und/oder identische bevorzugte Ausführungsformen aufweisen, wie sie insbesondere in den abhängigen Ansprüchen definiert sind.

Die vorliegende Erfindung wird nun nachfolgend exemplarisch anhand von Ausführungsbeispielen unter Bezugnahme auf die begleitenden Figuren näher erläutert.
- Fig. 1a: zeigt eine schematische Ansicht einer Windenergieanlage.
- Fig. 1b: zeigt eine schematische Ansicht einer bekannten Aktuatoreinrichtung.
- Fig. 2: zeigt eine schematische Ansicht eines Ausführungsbeispiels einer Aktuatoreinrichtung.
- Fig. 3: zeigt eine schematische Ansicht eines weiteren Ausführungsbeispiels einer Aktuatoreinrichtung.
- Fig. 4: zeigt eine schematische Ansicht eines weiteren Ausführungsbeispiels einer Aktuatoreinrichtung.
- Figuren 5a und 5b: zeigen schematische Draufsichten eines Ausführungsbeispiels einer Aktuatoreinrichtung.
- Fig. 6: zeigt eine schematische Ansicht eines weiteren Ausführungsbeispiels einer Aktuatoreinrichtung.
- Fig. 7: zeigt eine schematische Ansicht eines Ausführungsbeispiels einer Aktuatoreinrichtung an einem Rotorblatt.
- Figuren 8a und 8b: zeigen schematisch Detailansichten des in Fig. 7 gezeigten Ausführungsbeispiels.
- Figuren 9a bis 9d: zeigen schematische Ansichten eines weiteren Ausführungsbeispiels einer Aktuatoreinrichtung.
- Fig. 10: zeigt eine schematische Ansicht eines Ausführungsbeispiels mit Verstärkerrahmen.
- Fig. 11: zeigt schematisch und exemplarisch einen Querschnitt eines Rotorblattes mit einer Auftriebsklappe.
- Fig. 12: zeigt schematisch und exemplarisch eine perspektivische Ansicht eines weiteren Ausführungsbeispiels einer Aktuatoreinrichtung.

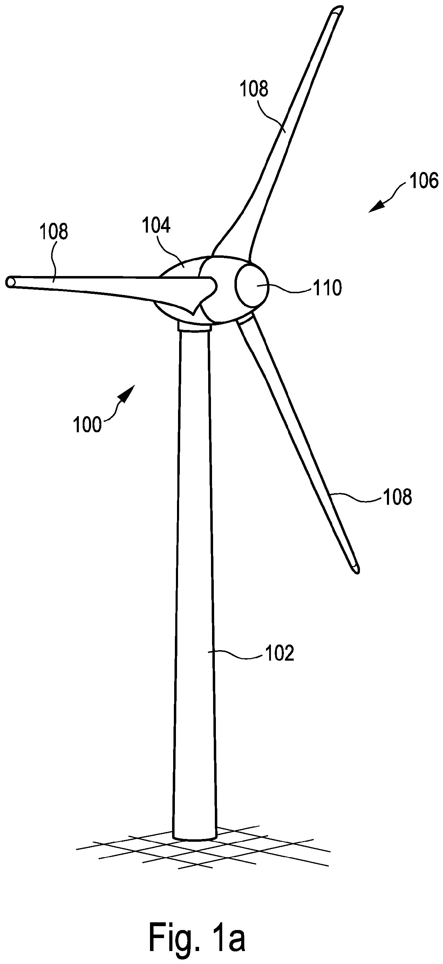

Figur 1a zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

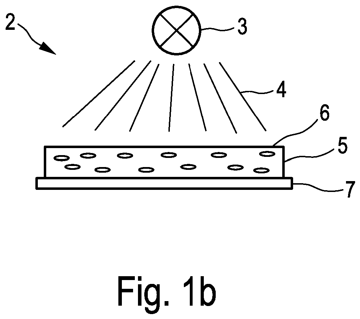

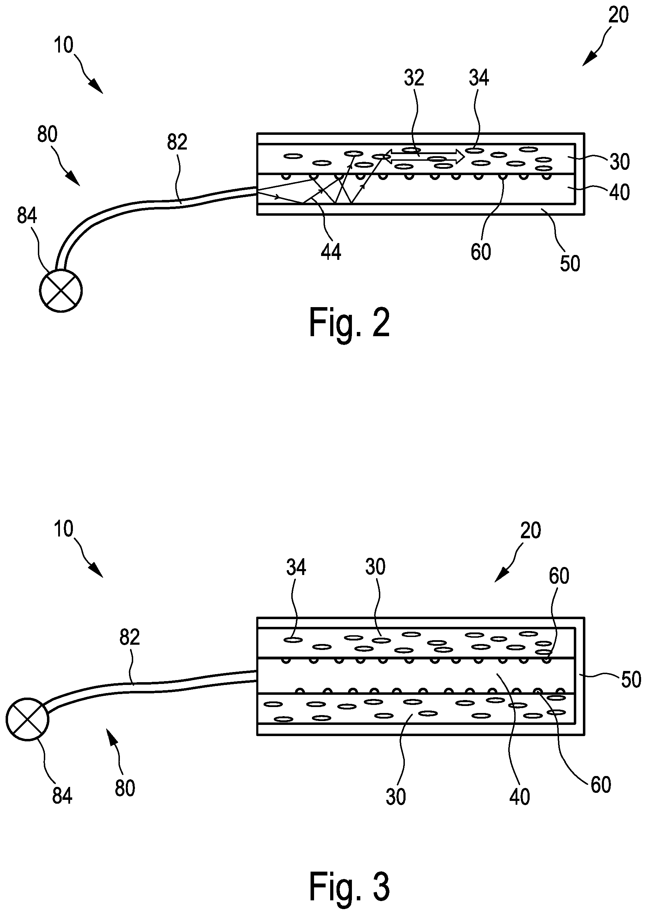

Figur 1b zeigt eine schematische Ansicht einer bekannten Aktuatoreinrichtung 2, bei der mittels einer Lichtquelle 3 Anregungslicht 4 auf eine aktive Schicht 5 geleitet wird. Die aktive Schicht 5 umfasst einen Fotoaktuator 6, der eine Dehnung der Aktuatorschicht 5 basierend auf dem Anregungslicht 4 bewirkt. Die Aktuatorschicht 5 ist auf einem Substrat 7 angebracht. Durch die induzierte Dehnung der Aktuatorschicht 5 kann sich beispielsweise die Schicht 5 einschließlich des Substrates 7 verbiegen. Die Einstrahlung von Anregungslicht 4 der Lichtquelle 3 erfolgt in dem bekannten Beispiel flächig und direkt über die gesamte Aktuatorschicht 5, ohne Verwendung eines Lichtleiters oder Ähnlichem. Figur 2 zeigt schematisch und exemplarisch eine Aktuatoreinrichtung 10, beispielsweise für eine Windenergieanlage 100, wie sie in Figur 1a gezeigt ist. Die Aktuatoreinrichtung 10 weist eine Aktuatorkomponente 20 und eine Steuerungskomponente 80 auf. Die Steuerungskomponente 80 ist vorzugsweise derart ausgebildet, dass sie die Aktuatorik der Aktuatorkomponente 20 steuert.

Die Aktuatorkomponente 20 weist in diesem Beispiel eine Aktuatorschicht 30 mit einer Vorzugsrichtung 32, in dem Beispiel horizontal gezeigt, auf. Die Aktuatorschicht 30 weist einen Photoaktuator 34 auf, der dazu eingerichtet ist, eine Dehnung und/oder Spannung der Aktuatorschicht 30 in der Vorzugsrichtung 32 zu verändern, in Abhängigkeit von Licht, das in die Aktuatorschicht 30 eingestrahlt wird. Bei der Aktuatorschicht 30 handelt es sich beispielsweise um eine Harzmatrix mit eingebetteten anisotropen Kristallen als Photoaktuator 34. Die Vorzugsrichtung 32 und die Photoaktuatoren 34 sind selbstverständlich nur beispielhaft gewählt, in anderen Ausführungsbeispielen sind andere Materialien denkbar und/oder andere Vorzugsrichtungen denkbar.

Im Wesentlichen parallel zu der Aktuatorschicht 30 weist die Aktuatorkomponente 20 ferner eine anregende Schicht 40 auf. Die anregende Schicht 40 ist dazu eingerichtet, Anregungslicht 44 in die Aktuatorschicht 30 zu leiten. In dem Beispiel der Figur 2 leitet die anregende Schicht 40 Anregungslicht 44 über die gesamte Länge der Aktuatorkomponente 20 und der Aktuatorschicht 30, welche der Vorzugsrichtung 32 entspricht, ein. Die anregende Schicht 40 kann beispielsweise ultradünnes Glas bzw. ein Polymer aufweisen und in einer Dicke von vorzugsweise 20 bis 100 µm ausgebildet sein.

Die Steuerungskomponente 80 weist einen Lichtleiter 82 und einen Lichtquelle 84 auf. Die Lichtquelle 84 ist entfernt von der Aktuatorkomponente 20 angeordnet und der Lichtleiter 82 ist dazu eingerichtet, von der Lichtquelle 84 emittiertes Licht in die anregende Schicht 40 zu leiten. Die Lichtquelle 84 kann dazu eingerichtet sein, Licht einer oder mehrerer Wellenlängen zu emittieren. Die Wellenlängen des emittierten Lichtes entsprechen vorzugsweise einer oder mehreren Wellenlängen von Licht, das geeignet ist, den Photoaktuator 34 zu aktivieren. In anderen Ausführungsbeispielen kann die Wellenlänge des von der Lichtquelle 84 emittierten Lichtes auch von der Wellenlänge abweichen, die der Photoaktuator 34 zur Aktivierung benötigt. Beispielsweise kann dann ein Konversionselement (nicht gezeigt) in der anregenden Schicht 40 vorgesehen sein, beispielsweise ein Element, das ein fluoreszierendes oder phosphoreszierendes Material aufweist.

In Figur 2 ist weiter eine Verspiegelung 50 gezeigt, welche die Aktuatorkomponente 20 an mehreren Seitenflächen umschließt und dazu eingerichtet ist, das Anregungslicht 44 zu reflektieren. Die Verspiegelung 50 sorgt dafür, dass ein Großteil des über den Lichtleiter 82 in die anregende Schicht eingeleiteten Lichtes zur Anregung der Aktuatorschicht 30 nutzbar ist. In anderen Ausführungsbeispielen ist die Verspiegelung 50 nur teilweise, insbesondere an der Seite der anregenden Schicht 40, welche der Aktuatorschicht 30 gegenüberliegt, vorgesehen.

In Figur 2 ist ferner ein Diffusionselement 60 gezeigt, welches zwischen Aktuatorschicht 30 und anregender Schicht 40 vorgesehen ist und dazu eingerichtet ist, Anregungslicht 44 in die Aktuatorschicht 30 diffus einzuleiten. Das Diffusionselement 60 kann beispielsweise als Oberflächenunregelmäßigkeiten der anregenden Schicht 40 ausgebildet sein, insbesondere als gelaserte und/oder geätzte Mikrokavitäten. In anderen Ausführungsbeispielen kann das Diffusionselement 60 auch als Teil der Aktuatorschicht 30 oder als eigenständiges Element ausgebildet sein.

Figur 3 zeigt schematisch und exemplarisch ein weiteres Ausführungsbeispiel einer Aktuatoreinrichtung 10. Die in Figur 3 gezeigte Aktuatoreinrichtung weist zwei parallele Aktuatorschichten 30 mit einer dazwischenliegenden anregenden Schicht 40 auf. Licht aus der anregenden Schicht 40 kann somit entweder nach oben oder nach unten in eine der beiden Aktuatorschichten 30 eintreten. Die Aktuatorschichten 30 können entweder gleich oder voneinander verschieden sein, beispielsweise Photoaktuatoren aufweisen, die gleiche oder verschiedene Anregungscharakteristiken haben. Die Vorzugsrichtung beider Aktuatorschichten 30 kann gleich oder unterschiedlich sein.

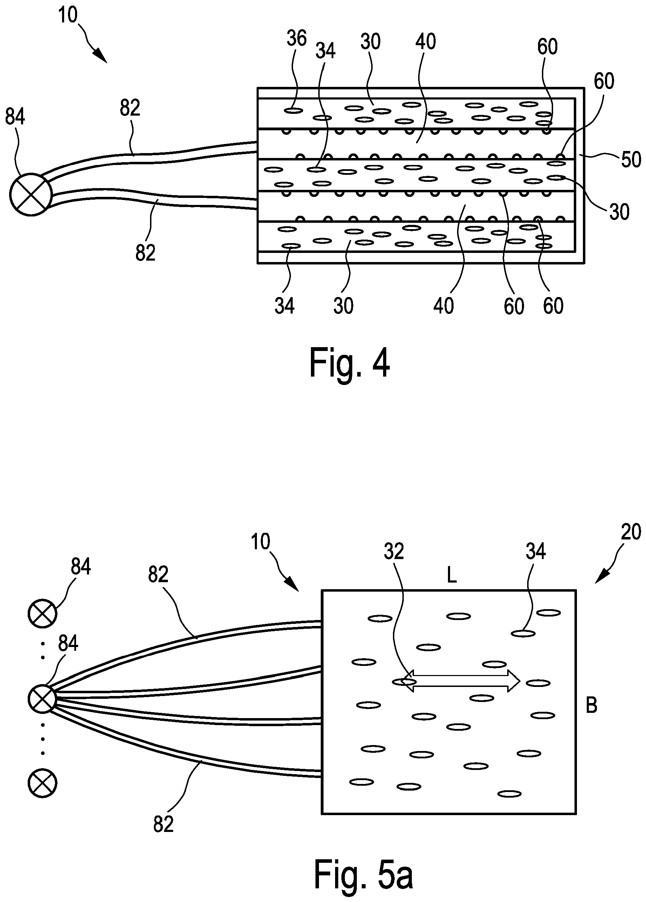

Figur 4 zeigt schematisch und exemplarisch ein weiteres Ausführungsbeispiel einer Aktuatoreinrichtung 10 mit drei Aktuatorschichten 30 und parallel dazu zwei dazwischenliegenden anregenden Schichten 40. Jede der anregenden Schichten 40 ist über einen Lichtleiter 82 mit der Lichtquelle 84 verbunden. In weiteren Beispielen können beliebig viele, auf diese Weise gestapelte Anordnungen von Aktuatorschichten 30 und anregenden Schichten 40 entworfen werden. Bei dieser Form gestapelter Schichtanordnungen verläuft die Vorzugsrichtung vorzugsweise entlang der Stapelungsrichtung, sodass der Stapel dicker bzw. dünner wird, wenn die Aktuatorschicht 30 bzw. die Aktuatorschichten 30 angeregt werden. Somit kann nämlich der Aktuatorweg einer einzelnen Aktuatorschicht 30 über die gesamte Aktuatoreinrichtung 10 vergrößert werden, da für jede der Aktuatorschichten 30 ein Beitrag zum Wachsen, das heißt zur Ausdehnung, der Aktuatorkomponente 20 auftritt.

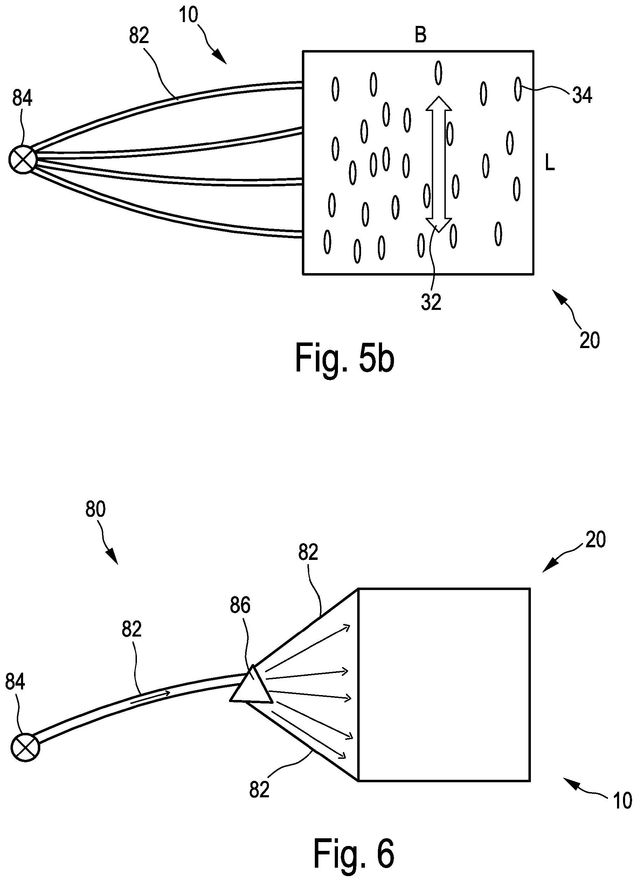

Figuren 5a und 5b zeigen schematisch und exemplarisch Draufsichten auf eine Aktuatoreinrichtung 10 bzw. eine Aktuatorschicht 30 mit Photoaktuator 34 davon. Figur 5a unterscheidet sich von Figur 5b in der Vorzugsrichtung, bzw. der Anisotropie des Photoaktuators 34. Mit L ist die Ausdehnungsrichtung der Aktuatorkomponente 20 bezeichnet, welche der Vorzugsrichtung 32 entspricht, in welcher die Aktuatorschicht 30 auf Anregung eine Streckung, bzw. Stauchung, erfährt. Senkrecht dazu ist die Breite B gezeigt, welche im Wesentlichen keine Änderung erfährt. Figur 5a zeigt den Fall, bei dem die Lichteinleitung mittels Lichtleiter 82 über die Breitenrichtung B verteilt erfolgt, das heißt, die Ausdehnung in Vorzugsrichtung 32 erfolgt in Richtung der Lichteinleitung 82. In dem anderen, in Figur 5b gezeigten Fall, wird die Lichteinleitung mittels Lichtleiter 82 über die Längsrichtung L der Aktuatorkomponente 20 bewirkt, das heißt, die Ausdehnung in Vorzugsrichtung 32 erfolgt senkrecht zu der Lichteinleitung.

Auch Kombinationen der Lichteinleitung sowohl in Längen- als auch in Breitenrichtung sind vorstellbar. In anderen Ausführungsbeispielen ist die Aktuatorkomponente 20 bei Aktivierung sowohl in Längsrichtung L als auch in Breitenrichtung B invariant und die Auszählung erfolgt senkrecht dazu, beispielsweise in Dickenrichtung des in Figur 3, bzw. 4 gezeigten Stapels von Schichten.

Figur 6 zeigt ein weiteres Ausführungsbeispiel einer Aktuatoreinrichtung 10 schematisch und exemplarisch. Vor dem Eintritt in die Aktuatorkomponente 20 weist die Steuerungskomponente 80 in dem Lichtleiter 82 ein optisches Element 86 zur Strahlfächerung auf. Während in dem Beispiel ein eintreffender Strahl 82 in das optische Element 86 eintritt, tritt ein breiter Fächer von optischen Strahlen aus dem optischen Element 86 aus. Der Fächer von Strahlen kann beispielsweise mittels mehrerer Lichtleiter 82 auf Ausgangsseite in die Aktuatorkomponente 20 eingeleitet werden. Das optische Element 86 ist beispielsweise ein Prisma oder Ähnliches.

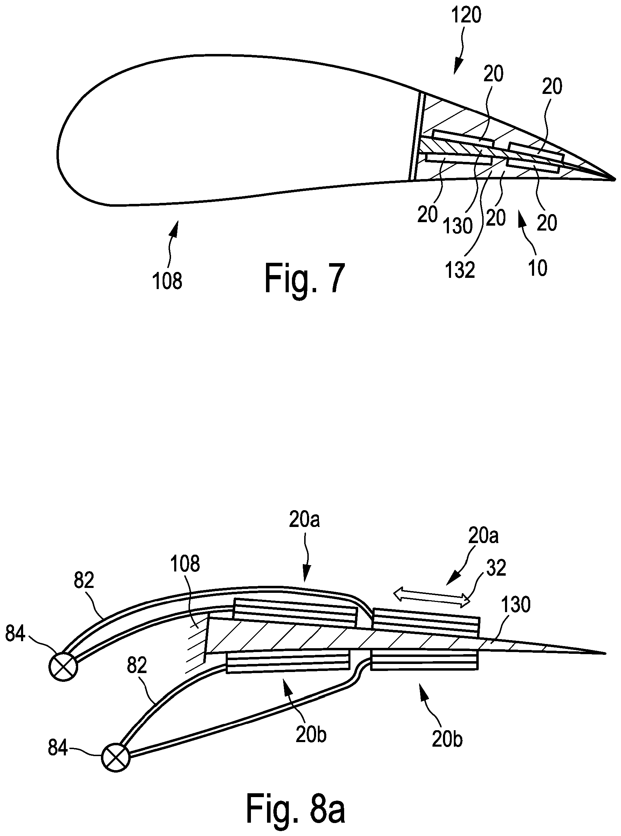

Figur 7 zeigt schematisch und exemplarisch ein Ausführungsbeispiel der erfindungsgemäßen Aktuatoreinrichtung 10, die in einem Hinterkantenbereich 120 eines Rotorblattes 108 einer Windenergieanlage eingesetzt ist und zur Verwirklichung der Ansteuerung einer Servoklappe ausgelegt ist. Figur 7 zeigt das Profil des Windenergieanlagenrotorblattes 108 im Querschnitt. Der Hinterkantenbereich 120 weist in diesem Ausführungsbeispiel ein Trägersubstrat 130, das im Wesentlichen in der Mitte des Profils angeordnet ist, auf. Um das Trägersubstrat 130 herum sind sowohl auf der oberen Seite als auch auf der unteren Seite in dem Beispiel vier Aktuatorkomponenten 20 angeordnet. Die Aktuatorkomponenten 20 sind in diesem Beispiel flächige Aktuatoren, die eine Biegung der gesamten Aktuatorkomponente 20 bewirken. Zur Formgebung, und um das Profil des Hinterkantenbereiches 120 zu vervollständigen, sind das Trägersubstrat 130 und die Aktuatorkomponenten 20 mit einem elastischen Formmaterial 132 eingeschlossen.

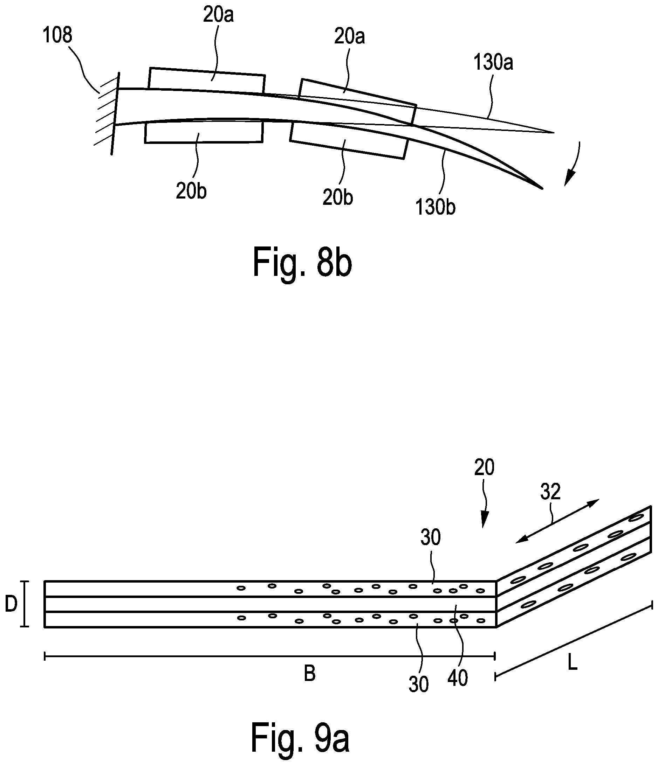

Die Funktionsweise der in Figur 7 gezeigten Hinterkanten-Klappe 120 wird mit Verweis auf Figuren 8a und 8b im Detail gezeigt. Figuren 8a und 8b zeigen den Hinterkanten- bzw. Klappenbereich 120 vergrößert und ohne das elastische Formmaterial 132 im Profil. Das Trägersubstrat 130, das beispielsweise ein GFK-Material oder ähnliches Material aufweist oder daraus besteht, ist in Figur 8a in einer neutralen Position gezeigt. Das heißt, das Trägersubstrat 130 ist nicht ausgelenkt, was einer neutralen Klappenstellung entspricht. Sowohl auf der Oberseite als auch auf der Unterseite, das heißt, bezogen auf das Rotorblatt 108, sowohl auf der Saugseite als auch auf der Druckseite, weist das Trägersubstrat 130 je zwei Aktuatorkomponenten 20a, bzw. 20b auf. Die Vorzugsrichtung 32 der jeweiligen Aktuatorkomponenten 20a, 20b verläuft in Richtung der Profilsehne des Rotorblattes 108. Das Trägersubstrat 130 ist an dem vorderen Ende, das heißt, dem Ende, das in Richtung der Vorderkante des Rotorblattes 108 zeigt, an dem Rotorblatt 108 befestigt.

Die Aktuatorkomponenten 20a und 20b werden von jeweils einer unabhängigen Lichtquelle 84 angesteuert, da die Ansteuerung der Aktuatorkomponenten 20a von der Ansteuerung der Aktuatorkomponenten 20b unterschiedlich sein kann, wie im Folgenden weiter beschrieben wird. Indem die Aktuatorkomponenten 20a auf der Saugseite angeregt werden, in Vorzugsrichtung 32 eine Dehnung vorzunehmen, erfährt das Trägersubstrat 130 eine Biegung, was dem Übergang von der Position 130a zu der Position 130b in Figur 8b entspricht. In einer bevorzugten Ausführungsform werden die Aktuatorkomponenten 20b zeitgleich derart angesteuert, dass sie zur gleichen Zeit eine Stauchung erfahren. Somit muss die Biegung des Trägersubstrats 130 nicht gegen die Aktuatorkomponenten 20b, sondern kann im Gegensatz dazu sogar mit deren Unterstützung erfolgen. Für den umgekehrten Vorgang, das heißt den Übergang des Trägersubstrats von der gebogenen Position 130b zu der neutralen Position 130a, ist eine umgekehrte Ansteuerung der Aktuatorkomponenten 20b, bzw. 20a notwendig. Beispielsweise können die Aktuatorkomponenten 20a derart angesteuert werden, dass sie eine Stauchung erfahren. Alternativ oder vorzugsweise zusätzlich dazu können die Aktuatorkomponenten 20b angesteuert werden, eine Dehnung zu erfahren. In Figur 8 sind die Aktuatorkomponenten 20 beispielhaft aus drei Schichten, zwei Aktuatorschichten mit einer dazwischen angeordneten anregenden Schicht, gezeigt. Es ist selbstverständlich, dass in anderen Ausführungsbeispielen auch andere Ausgestaltungen der Aktuatorkomponente 20 eingesetzt werden können.

In allen Ausführungsformen umfasst eine Ansteuerung, insbesondere durch die Steuerkomponente 80, vorzugsweise eine Beleuchtung, eine Nichtbeleuchtung oder jede Beliebige Kombination oder Zwischenstufe aus Beleuchtung und Nichtbeleuchtung, beispielsweise eine Beleuchtung mit einer verringerten Intensität, mit Modulationen, variablen Mustern, Wellenlängen etc. Eine zeitgleiche Ansteuerung mehrerer Aktuatorkomponenten umfasst demnach beispielsweise auch eine zeitgleiche Ansteuerung durch Beleuchtung, durch Nichtbeleuchtung oder durch jede der eben erwähnten Kombinationen.

Figur 9a bis 9d zeigen ein weiteres Ausführungsbeispiel einer Aktuatoreinrichtung 10 mit einer Vorzugsrichtung 32, die senkrecht auf der Richtung steht, mit der der Lichtleiter 82 Licht in die anregende Schicht 40 einleitet.

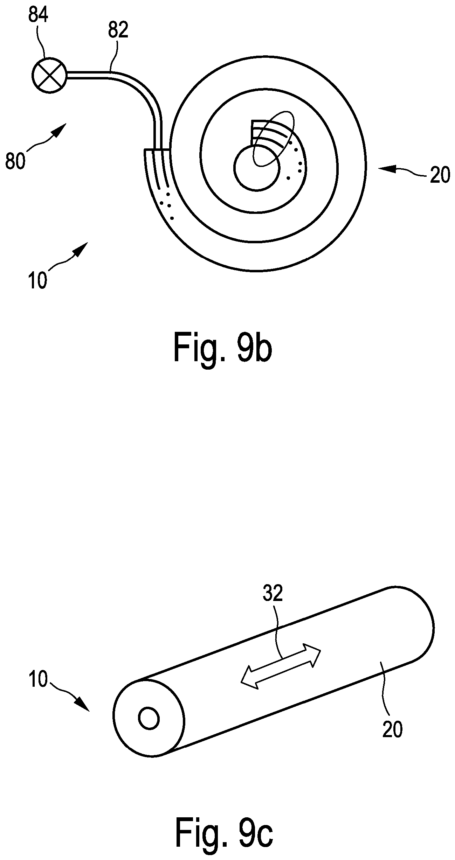

Figur 9a zeigt schematisch eine flächig ausgestaltete Aktuatorkomponente 20 mit zwei Aktuatorschichten 30 und einer dazwischenliegenden anregenden Schicht 40. Die Vorzugsrichtung 32 entspricht einer als L definierten Längsrichtung, die einzelnen Schichten der Aktuatorkomponente 20 sind in einer Dicke in Richtung D gestapelt und die flächige Ausdehnung der Aktuatorkomponente umfasst neben der Längsrichtung L auch eine Breitenrichtung B. Figur 9b zeigt nun, wie die in Figur 9a gezeigte Aktuatorkomponente 20 entlang der Breitenrichtung B aufgerollt wird. Die Vorzugsrichtung 32 ändert sich dabei nicht, das heißt, sie verläuft immer noch in Längsrichtung L in Figur 9b senkrecht zu der Zeichenebene. Dies ist perspektivisch in Figur 9c gezeigt. Im Vergleich zu der Darstellung der Figur 9a ist klar erkennbar, dass die Aktuatoreinrichtung 10 in Breitenrichtung B weniger Ausdehnung erfordert. Somit kann ein Aktuator realisiert werden, der die gleiche Aktuatorwirkung bereitstellt, wie der in Figur 9a gezeigte, flächige Aktuator, wobei er allerdings nur einen Bruchteil der Grundfläche benötigt. Dies ist besonders für platzkritische Anwendungen vorteilhaft.

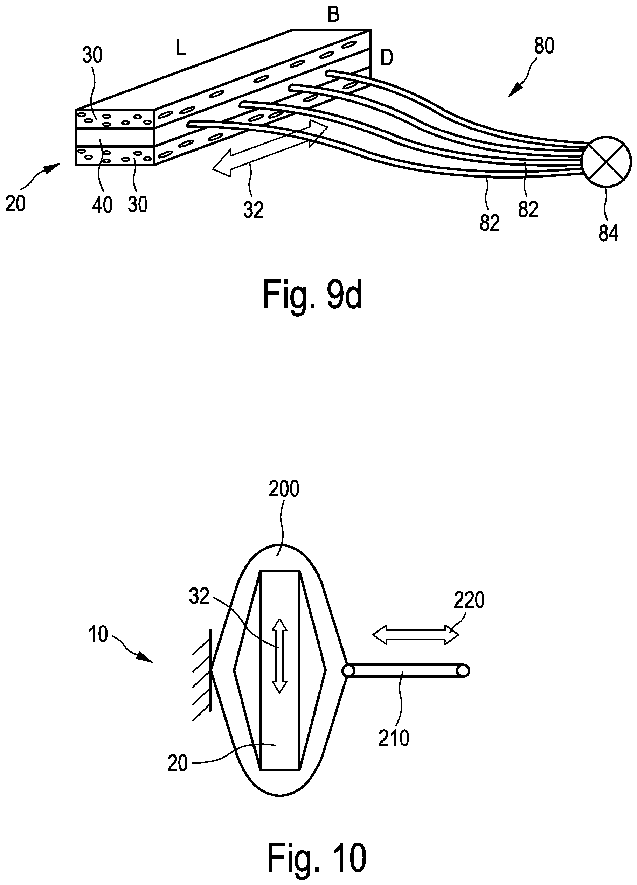

In Figur 9d ist ein Ausschnitt der in Figur 9a gezeigten Aktuatorkomponente 20 schematisch und perspektivisch unter Darstellung des Anschlusses der Steuerungskomponente 80 einschließlich Lichtquelle 84 und mehrerer Lichtleiter 82, die an verschiedenen Positionen in Längsrichtung L Licht in die anregende Schicht 40 einleiten, gezeigt.

Figur 10 zeigt schematisch und exemplarisch ein Ausführungsbeispiel der Aktuatoreinrichtung 10, mit einem Verstärkerrahmen 200 zur Übersetzung der Aktuatorbewegung in Vorzugsrichtung 32. In diesem Ausführungsbeispiel ist die Aktuatorkomponente 20 vorzugsweise als Stapel von Schichten ausgestaltet, wobei die Vorzugsrichtung 32 entsprechend der Stapelrichtung der Schichten ist. Der Verstärkerrahmen 200 übersetzt die Bewegung in Vorzugsrichtung 32 dahingehend, dass eine im Wesentlichen senkrecht darauf stehende Aktuatorrichtung 220 mit einstellbarem Übersetzungsverhältnis resultiert. Beispielsweise kann dadurch eine Schub-Zugstange 210 über einen deutlich größeren Weg in der Aktuatorrichtung 220 bewegt werden, als sich die Aktuatorkomponente 20 in der Vorzugsrichtung 32 dehnt, bzw. staucht. Die Auslegung des Aktuators ist ähnlich zu der bekannten Auslegung eines Piezo-Stacks, typische Verstärkungsfaktoren für Verstärkerrahmen 200 bewegen sich in dem Bereich um 5. Das heißt, dass eine Dehnung um beispielsweise 100 µm in Vorzugsrichtung 32 in einer Dehnung um beispielsweise 500 µm) entlang der Aktuatorrichtung 220 resultiert. Der Verstärkerrahmen 200 ist nur ein Beispiel für eine Übersetzungseinrichtung und auch die Schub-/Zugstange 210 ist nur ein Beispiel für ein Koppelelement, auch andere Umsetzungen sind dem Fachmann bekannt.

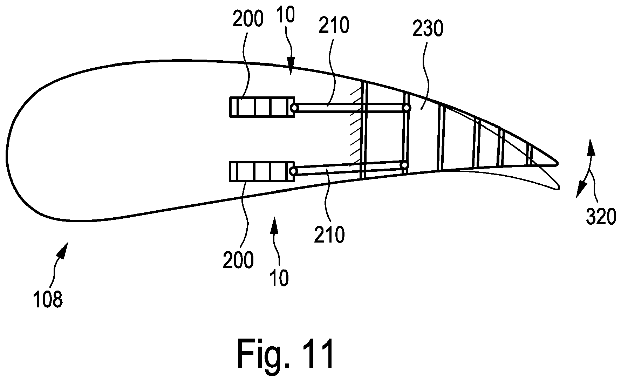

Figur 11 zeigt schematisch und exemplarisch einen Querschnitt eines Rotorblattes 108 mit einer Auftriebsklappe 230, die durch zwei Aktuatoreinrichtungen 10, wie sie beispielsweise in Figur 10 gezeigt sind, gesteuert wird. Jeder der Aktuatoreinrichtungen 10 weist den Verstärkungsrahmen 200 auf und bewirkt eine Ansteuerung der Schub-Zugstangen 210, sodass die Klappe 230 entlang einer Auslenkungsrichtung 320 ausgelenkt wird. Im Vergleich mit einer Servoklappe verbiet sich die Auftriebsklappe 230 im Wesentlichen nicht, sondern wird als Ganze mechanisch verlagert. Hierzu werden vorzugsweise die beiden Schub-Zugstangen 210 in entgegengesetzten Richtungen bewegt, sodass es zu einer Kippung der Klappe 230 in Richtung 320 kommt. Obwohl in diesem Beispiel Schub-Zugstangen 210 als Kraftüberträger zum Einsatz kommen, sind in anderen Ausführungsbeispielen natürlich auch sämtliche anderen mechanischen Implementierungen vorstellbar.

Obwohl beispielsweise Auftriebsklappen und Servoklappen als aktive Elemente in Ausführungsbeispielen beschrieben wurden, sind die obigen Vorteile auch für andere aktive Elemente, beispielsweise Vortex-Generatoren und Ähnliches, erreichbar. Auch Kombination, wie beispielsweise eine kombinierte Auftriebs- und Servoklappe, sind vorteilhaft vorstellbar.

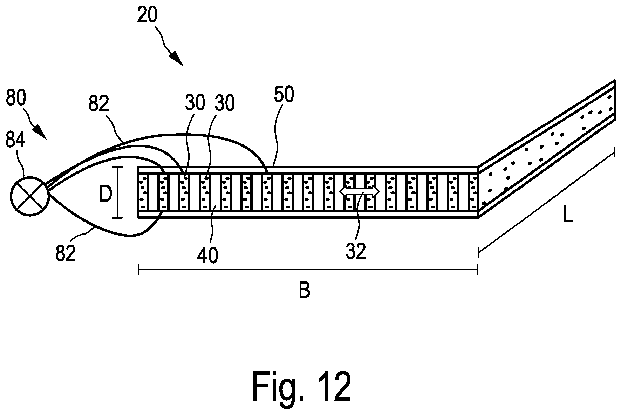

Figur 12 zeigt schematisch ein weiteres Ausführungsbeispiel einer flächig ausgestalteten Aktuatorkomponente 20, wie sie beispielsweise in Figur 9a gezeigt ist. Figur 12 zeigt einen flächigen Aktuator, bei dem die Schichtausdehnung der Aktuatorschichten 30 und anregenden Schichten 40 senkrecht auf der Aktuatorfläche steht, mit der der Aktuator in Verbindung mit einem Substrat, beispielsweise einem Teil des Rotorblattes der Windenergieanlage, ist. Die Ausführungsform kann somit als ein Stapelaktuator angesehen werden, von dem eine dünne Scheibe mit einer Dicke D abgeschnitten wurde, die flach entlang der Breitenrichtung B und Längenrichtung L ausgelegt ist. Die Anordnung ermöglicht eine Dehnung in Vorzugsrichtung 32, welche in der flächigen Ebene liegt. Die Vorzugsrichtung 32 liegt senkrecht auf der Aktuatorschicht 30, die entlang der Vorzugsrichtung 32 gestapelt sind. In diesem Ausführungsbeispiel umfasst die Aktuatorkomponente 20 ferner eine Verspiegelung 50, die als Reflektionsschicht wirkt und für eine optimierte Einleitung des Anregungslichts aus den Lichtleitern 82 in die anregenden Schichten 40 sorgt.

## Patentansprüche

1. Aktuatoreinrichtung (10) für eine Windenergieanlage (100), insbesondere für ein Windenergieanlagen-Rotorblatt (108), mit einer Aktuatorkomponente (20) und einer Steuerungskomponente (80),
wobei die Aktuatorkomponente (20) wenigstens eine Aktuatorschicht (30) mit einer Vorzugsrichtung (32) und im Wesentlichen parallel zu der Aktuatorschicht (30) wenigstens eine anregende Schicht (40) aufweist,
wobei die Aktuatorschicht (30) einen Photoaktuator (34) umfasst, wobei der Photoaktuator (34) dazu eingerichtet ist, basierend auf Anregungslicht eine Dehnung und/oder Spannung der Aktuatorschicht (30) in der Vorzugsrichtung (32) zu verändern,
wobei die anregende Schicht (40) dazu eingerichtet ist, Anregungslicht in die Aktuatorschicht (30) zu leiten,
wobei die Steuerungskomponente (80) eine Lichtquelle (84) und einen Lichtleiter (82) umfasst, wobei die Lichtquelle (84) von der anregenden Schicht (40) entfernt angeordnet ist und mittels des Lichtleiters (82) mit der anregenden Schicht (40) verbunden ist.

2. Aktuatoreinrichtung (10) nach Anspruch 1, wobei der Photoaktuator (34) wenigstens einen photostriktiven Aktuator und/oder einen photomechanischen Aktuator umfasst, wobei der photomechanische Aktuator insbesondere einen Aktuator aus wenigstens einer der folgenden Gruppen umfasst:
- polarisierte photomechanische Aktuatoren,
- flüssigkristallbasierte photomechanische Aktuatoren,
- auf optothermalen Übergängen basierende photomechanische Aktuatoren,
- ladungsinduzierte photomechanische Aktuatoren und
- auf Strahlungsdruck basierende photomechanische Aktuatoren.

3. Aktuatoreinrichtung (10) nach einem der vorstehenden Ansprüche, wobei der Photoaktuator (34) wenigstens ein Material gehörend zu einer der folgenden Gruppen umfasst:
- Rotaxane,
- optisch aktivierbare Piezokristalle,
- Kohlenstoff-Nanoobjekte, insbesondere Kohlenstoffnanoröhren,
- ferroelektrische Materialien,
- photosiomerisierbare organische Verbindungen,
- flüssigkristalline Materialien und
- Xerogele.

4. Aktuatoreinrichtung (10) nach einem der vorstehenden Ansprüche, wobei die Aktuatorschicht (30) in wenigstens einer Richtung anisotrop ist und/oder wobei die Aktuatorschicht (30) einen Faserverbundstoff aufweist und/oder wobei der Photoaktuator (34) in der Aktuatorschicht (30) in einer Matrix, insbesondere einer Harzmatrix, eingebettet ist.

5. Aktuatoreinrichtung (10) nach einem der vorstehenden Ansprüche, wobei die Aktuatorkomponente (20) mindestens zwei Aktuatorschichten (30) mit mindestens einer, jeweils dazwischenliegenden anregenden Schicht (40) aufweist.

6. Aktuatoreinrichtung (10) nach einem der vorstehenden Ansprüche, wobei die Aktuatorkomponente (20) eingerichtet ist, mittels Anregungslicht eine Kraft von 10 bis 50 Newton je Quadratmillimeter Querschnittsfläche der Aktuatorkomponente (20) aufzubringen, wobei die Querschnittsfläche der Aktuatorkomponente senkrecht auf der Vorzugsrichtung (32) ist.

7. Aktuatoreinrichtung (10) nach einem der vorstehenden Ansprüche,
wobei die Aktuatorkomponente (20) als Dehnungsaktuatorkomponente ausgestaltet ist, wobei die Vorzugsrichtung (32) im Wesentlichen senkrecht auf der wenigstens einen Aktuatorschicht (30) steht, oder
wobei die Aktuatorkomponente (20) als Biegeaktuatorkomponente ausgestaltet ist, wobei die Vorzugsrichtung (32) im Wesentlichen in einer Ebene der Aktuatorschicht (30) steht,
wobei ein Verhältnis von Aktorfläche zu einem Quadrat einer Referenzlänge der Aktuatorkomponente (20) insbesondere in einem Bereich von 0,0001 bis 0,01 liegt und insbesondere in dem Fall, dass die Aktuatorkomponente (20) als Dehnungsaktuatorkomponente ausgestaltet ist, in einem Bereich von 0,01 bis 1 liegt.

8. Aktuatoreinrichtung (10) nach Anspruch 7, wobei eine von der Aktuatorkomponente (20) verrichtbare mechanische Arbeit in einem Bereich von 100 bis 10.000 Joule je Kubikmeter Aktuatorvolumen liegt, wobei die von der Aktuatorkomponente (20) verrichtbare mechanische Arbeit insbesondere in dem Fall, dass die Aktuatorkomponente (20) als Dehnungsaktuatorkomponente ausgestaltet ist, in einem Bereich von 1.000 bis 10.000 Joule je Kubikmeter Aktuatorvolumen oder in dem Fall, dass die Aktuatorkomponente (20) als Biegeaktuatorkomponente ausgestaltet ist, in einem Bereich von 100 bis 1.000 Joule je Kubikmeter Aktuatorvolumen liegt.

9. Aktuatoreinrichtung (10) nach einem der Ansprüche 7 oder 8, wobei die Aktuatorkomponente (20) als Biegeaktuatorkomponente ausgestaltet und dazu eingerichtet ist, sich durch Anregung senkrecht zu einer Ebene der wenigstens einen Aktuatorschicht (30) und senkrecht zu der Vorzugsrichtung (32) zu biegen,
wobei ein Verhältnis von Höhe der Aktuatorkomponente (20) zu einer Länge der Aktuatorkomponente (20) in Vorzugsrichtung in einem Bereich von 0,001 bis 0,1, insbesondere in einem Bereich von 0,002 bis 0,02 liegt,
wobei eine Höhe der Aktuatorkomponente (20) senkrecht zu einer Ebene der wenigstens einen Aktuatorschicht (20) insbesondere in einem Bereich von 1 mm bis 10 mm, bevorzugt in einem Bereich von 3 mm bis 7 mm und besonders bevorzugt von etwa 5 mm liegt.

10. Aktuatoreinrichtung (10) nach einem der vorstehenden Ansprüche, wobei die anregende Schicht (40) ultradünnes Glas und/oder Polymer, insbesondere mit einer Stärke von 20µm bis 100µm, umfasst.

11. Aktuatoreinrichtung (10) nach einem der vorstehenden Ansprüche, wobei die Aktuatorkomponente (20) eine Verspiegelung (50) aufweist, die dazu eingerichtet ist, das Anregungslicht zu reflektieren,
wobei die Verspiegelung (50) die Aktuatorkomponente (20) an wenigstens einer Seitenfläche zumindest teilweise umgibt, insbesondere die Aktuatorkomponente (20) an der Seite der anregenden Schicht (40) umgibt, die der Aktuatorschicht (30) gegenüberliegt.

12. Aktuatoreinrichtung (10) nach einem der vorstehenden Ansprüche, wobei der Lichtleiter (82) derart angeordnet ist, Licht in einer Längsrichtung (L) in die anregende Schicht (40) einzuleiten, wobei die Längsrichtung (L) in einer Ebene der anregenden Schicht (40) liegt, wobei die Ebene der anregenden Schicht (40) durch die Längsrichtung (L) und eine Breitenrichtung (B) aufgespannt wird, wobei insbesondere
die Vorzugsrichtung (32) in einem Fall, in dem die Aktuatorkomponente (20) als Biegeaktuatorkomponente ausgestaltet ist, im Wesentlichen der Längsrichtung (L) oder einer davon abweichenden Richtung, die in einer Ebene der wenigstens einen Aktuatorschicht (30) liegt, entspricht, oder
die Vorzugsrichtung (32) in einem Fall, in dem die Aktuatorkomponente (20) als Dehnungsaktuatorkomponente ausgestaltet ist, im Wesentlichen senkrecht auf der Längsrichtung (L) und/oder der Ebene der wenigstens einen Aktuatorschicht (30) steht.

13. Aktuatoreinrichtung (10) nach einem der vorstehenden Ansprüche, die weiter einen Verstärkungsrahmen (200) aufweist, welcher die Aktuatorkomponente (20) umschließt,
wobei der Verstärkungsrahmen (200) derart angeordnet ist, dass eine Dehnung der Aktuatorschicht (30) in Vorzugsrichtung (32) zu einer Stauchung des Verstärkungsrahmens (200) senkrecht zu der Vorzugsrichtung (32) führt,
wobei der Verstärkungsrahmen (200) zur Übersetzung zwischen der Bewegung in Vorzugsrichtung (32) und senkrecht dazu eingerichtet ist.

14. Aktuatoreinrichtung (10) nach einem der vorstehenden Ansprüche, wobei die anregende Schicht (40) auf der oder den an die Aktuatorschicht (30) angrenzenden Seiten wenigstens ein Diffusionselement (60) zur diffusen Einleitung von Anregungslicht in die Aktuatorschicht (30) aufweist, wobei das Diffusionselement (60) insbesondere Oberflächenunregelmäßigkeiten, vorzugsweise gelaserte und/oder geätzte Microkavitäten, umfasst.

15. Aktuatoreinrichtung (10) nach einem der vorstehenden Ansprüche, wobei die anregende Schicht (40) ein Konversionselement aufweist, das dazu eingerichtet ist, Licht von der Lichtquelle (84) in Anregungslicht umzuwandeln, wobei das Anregungslicht eine andere Wellenlänge und/oder ein anderes Spektrum als das Licht der Lichtquelle (84) aufweist.

16. Rotorblatt (108) einer Windenergieanlage (100) mit einer Aktuatoreinrichtung (10) nach einem der Ansprüche 1 bis 15 und einem aktiven Element (120, 230), wobei die Aktuatoreinrichtung (10) zur Steuerung des aktiven Elementes (120, 230) eingerichtet ist.

17. Rotorblatt nach Anspruch 16, wobei
die Aktuatorkomponente (20) der Aktuatoreinrichtung (10) als Biegeaktuatorkomponente ausgestaltet ist und wobei
das aktive Element als Servoklappe (120) ausgestaltet ist, wobei
die Aktuatorkomponente (20) flächig über den Bereich der Servoklappe (120) montiert ist.

18. Rotorblatt nach Anspruch 16, wobei
die Aktuatorkomponente (20) der Aktuatoreinrichtung (10) als Dehnungsaktuatorkomponente ausgestaltet ist und wobei
das aktive Element als Auftriebsklappe (230) ausgestaltet ist, wobei
das Rotorblatt (108) ferner eine Übersetzungseinheit (200, 210) zum Übersetzen der Bewegung der Aktuatorkomponente (20) in eine Steuerung der Auftriebsklappe (230) aufweist, wobei insbesondere
die Aktuatoreinrichtung (10) einen Verstärkungsrahmen aufweist, welcher die Aktuatorkomponente umschließt und
die Übersetzungseinheit insbesondere eine Schub-/Zugstange zur Kopplung des Verstärkungsrahmens an die Auftriebsklappe aufweist.

19. Windenergieanlage (100) mit einem Rotorblatt nach einem der Ansprüche 16 bis 18.

20. Montageverfahren zum Montieren einer Aktuatoreinrichtung (10) nach einem der Ansprüche 1 bis 15 an einem Rotorblatt (108) nach einem der Ansprüche 16 bis 18, wobei das Verfahren ein Anbringen der Aktuatorkomponente (20) an dem Rotorblatt (108) und/oder ein Verbinden der Steuerungskomponente (80) mit der Aktuatorkomponente (20) umfasst.

## Claims

1. An actuator device (10) for a wind power installation (100), in particular for a rotor blade (108) of a wind power installation, with an actuator component (20) and a control component (80),
wherein the actuator component (20) has at least one actuator layer (30) with a preferential direction (32) and, substantially parallel to the actuator layer (30), at least one exciting layer (40),
wherein the actuator layer (30) comprises a photoactuator (34), wherein the photoactuator (34) is designed to change a strain and/or stress of the actuator layer (30) in the preferential direction (32) on the basis of excitation light,
wherein the exciting layer (40) is designed to guide excitation light into the actuator layer (30),
wherein the control component (80) comprises a light source (84) and a light guide (82), wherein the light source (84) is arranged away from the exciting layer (40) and is connected to the exciting layer (40) by means of the light guide (82).

2. The actuator device (10) as claimed in claim 1, wherein the photoactuator (34) comprises at least one photostrictive actuator and/or photomechanical actuator, wherein the photomechanical actuator in particular comprises an actuator from at least one of the following groups:
- polarized photomechanical actuators,
- liquid-crystal-based photomechanical actuators,
- photomechanical actuators based on optothermal transitions,
- charge-induced photomechanical actuators and
- photomechanical actuators based on radiation pressure.

3. The actuator device (10) as claimed in one of the preceding claims, wherein the photoactuator (34) comprises at least one material belonging to one of the following groups:
- rotaxanes,
- optically activatable piezo crystals,
- carbon nano objects, in particular carbon nano tubes,
- ferroelectric materials,
- photoisomerizable organic compounds,
- liquid-crystalline materials, and
- xerogels.

4. The actuator device (10) as claimed in one of the preceding claims, wherein the actuator layer (30) is anisotropic in at least one direction and/or wherein the actuator layer (30) comprises a fiber composite and/or wherein the photoactuator (34) in the actuator layer (30) is embedded in a matrix, in particular a resin matrix.

5. The actuator device (10) as claimed in one of the preceding claims, wherein the actuator component (20) has at least two actuator layers (30) and at least one exciting layer (40) respectively lying inbetween.

6. The actuator device (10) as claimed in one of the preceding claims, wherein the actuator component (20) is designed to apply by means of excitation light a force of 10 to 50 newtons per square milimeter of the cross-sectional area of the actuator component (20), wherein the cross-sectional area of the actuator component is perpendicular to the preferential direction (32).

7. The actuator device (10) as claimed in one of the preceding claims, wherein
the actuator component (20) is configured as an extension actuator component, wherein the preferential direction (32) is substantially perpendicular to the at least one actuator layer (30), or
wherein the actuator component (20) is configured as a bending actuator component, wherein the preferential direction (32) is substantially in a plane of the actuator layer (30),
wherein a ratio of the actuator area to a square of a reference length of the actuator component (20) lies in particular in a range of 0.0001 to 0.01 and, in particular in the case where the actuator component (20) is configured as an extension actuator component, lies in a range of 0.01 to 1.

8. The actuator device (10) as claimed in claim 7, wherein mechanical work that can be performed by the actuator component (20) lies in a range of 100 to 10 000 joules per cubic meter of actuator volume, wherein in particular in the case where the actuator component (20) is configured as an extension actuator component the mechanical work that can be performed by the actuator component (20) lies in a range of 1000 to 10 000 joules per cubic meter of actuator volume or in the case where the actuator component (20) is configured as a bending actuator component lies in a range of 100 to 1000 joules per cubic meter of actuator volume.

9. The actuator device (10) as claimed in claim 7 or 8, wherein the actuator component (20) is configured as a bending actuator component and is designed to bend in response to excitation perpendicularly to a plane of the at least one actuator layer (30) and perpendicularly to the preferential direction (32).
wherein a ratio of a height of the actuator component (20) to a length of the actuator component (20) in the preferential direction lies in a range of 0.001 to 0.1, in particular in a range of 0.002 to 0.02
wherein a height of the actuator component (20) perpendicularly to a plane of the at least one actuator layer (20) lies in particular in a range of 1 mm to 10 mm, preferably in a range of 3 mm to 7 mm and particularly preferably of approximately 5 mm.

10. The actuator device (10) as claimed in one of the preceding claims, wherein the exciting layer (40) comprises ultra-thin glass and/or polymer, in particular with a thickness of 20 µm to 100 µm.

11. The actuator device (10) as claimed in one of the preceding claims, wherein the actuator component (20) has a mirror coating (50) which is designed to reflect the excitation light,
wherein the mirror coating (50) at least partially surrounds the actuator component (20) on at least one side face, in particular surrounds the actuator component (20) on the side of the exciting layer (40) that is opposite from the actuator layer (30).

12. The actuator device (10) as claimed in one of the preceding claims, wherein the light guide (82) is arranged in such a way as to introduce light into the exciting layer (40) in a longitudinal direction (L), wherein the longitudinal direction (L) lies in a plane of the exciting layer (40), wherein the plane of the exciting layer (40) is defined by the longitudinal direction (L) and the widthwise direction (B), wherein in particular
the preferential direction (32) substantially corresponds to the longitudinal direction (L) or a direction deviating therefrom that lies in a plane of the at least one actuator layer (30) in a case in which the actuator component (20) is configured as a bending actuator component, or
the preferential direction (32) is substantially perpendicular to the longitudinal direction (L) and/or the plane of the at least one actuator layer (30) in a case in which the actuator component (20) is configured as an extension actuator component.

13. The actuator device (10) as claimed in one of the preceding claims, which also has an amplification frame (200), which encloses the actuator component (20),
wherein the amplification frame (200) is arranged in such a way that an extension of the actuator layer (30) in the preferential direction (32) leads to a compression of the amplification frame (200) perpendicularly to the preferential direction (32),
wherein the amplification frame (200) is designed for transformation between the movement in the preferential direction (32) and perpendicularly thereto.

14. The actuator device (10) as claimed in one of the preceding claims, wherein the exciting layer (40) has on the side or sides adjacent to the actuator layer (30) at least one diffusion element (60) for the diffuse introduction of excitation light into the actuator layer (30), wherein the diffusion element (60) comprises in particular surface irregularities, preferably lasered and/or etched microcavities.

15. The actuator device (10) as claimed in one of the preceding claims, wherein the exciting layer (40) has a conversion element, which is designed for converting light from the light source (84) into excitation light, wherein the excitation light has a different wavelength and/or a different spectrum than the light of the light source (84).

16. A rotor blade (108) of a wind power installation (100) with an actuator device (10) as claimed in one of claims 1 to 15 and an active element (120, 230), wherein the actuator device (10) is designed for controlling the active element (120, 230).

17. The rotor blade as claimed in claim 16, wherein
the actuator component (20) of the actuator device (10) is configured as a bending actuator component and wherein
the active element is configured as a servo flap (120), wherein
the actuator component (20) is mounted in surface contact over the region of the servo flap (120).

18. The rotor blade as claimed in claim 16, wherein
the actuator component (20) of the actuator device (10) is configured as an extension actuator component and wherein
the active element is configured as a lift flap (230), wherein
the rotor blade (108) also has a transforming unit (200, 210) for transforming the movement of the actuator component (20) into a control of the lift flap (230), wherein in particular
the actuator device (10) has an amplification frame, which encloses the actuator component, and
the transforming unit in particular has a push/pull rod for coupling the amplification frame to the lift flap.

19. A wind power installation (100) with a rotor blade as claimed in one of claims 16 to 18.

20. A method of assembly for assembling an actuator device (10) as claimed in one of claims 1 to 15 on a rotor blade (108) as claimed in one of claims 16 to 18, wherein the method comprises attaching the actuator component (20) to the rotor blade (108) and/or connecting the control component (80) to the actuator component (20).

## Revendications

1. Dispositif actionneur (10) pour une éolienne (100), en particulier pour une pale de rotor d'éolienne (108), avec un composant d'actionnement (20) et un composant de commande (80),
dans lequel le composant d'actionnement (20) présente au moins une couche d'actionnement (30) avec une direction de prédilection (32) et, de manière sensiblement parallèle à la couche d'actionnement (30), au moins une couche d'excitation (40),
dans lequel la couche d'actionnement (30) comprend un photo-actionneur (34), dans lequel le photo-actionneur (34) est mis au point pour modifier, sur la base de la lumière d'excitation, un allongement et/ou une tension de la couche d'actionnement (30) dans la direction de prédilection (32),
dans lequel la couche d'excitation (40) est mise au point pour acheminer de la lumière d'excitation dans la couche d'actionnement (30),
dans lequel le composant de commande (80) comprend une source de lumière (84) et un guide d'ondes optiques (82), dans lequel la source de lumière (84) est disposée de manière éloignée de la couche d'excitation (40) et est raccordée à la couche d'excitation (40) au moyen du guide d'ondes optiques (82).

2. Dispositif actionneur (10) selon la revendication 1, dans lequel le photo-actionneur (34) comprend au moins un actionneur photostrictif et/ou un actionneur photomécanique, dans lequel l'actionneur photomécanique comprend en particulier un actionneur issu d'au moins un des groupes suivants :
- les actionneurs photomécaniques polarisés,
- les actionneurs photomécaniques à base de cristaux liquides,
- les actionneurs photomécaniques basés sur des transitions optothermiques,
- les actionneurs photomécaniques à induction de charge et
- les actionneurs photomécaniques basés sur la pression de rayonnement.

3. Dispositif actionneur (10) selon l'une quelconque des revendications précédentes, dans lequel le photo-actionneur (34) comprend au moins un matériau appartenant à un des groupes suivants :
- les rotaxanes,
- les piézocristaux pouvant être activés optiquement,
- les nano-objets en carbone, en particulier les nanotubes en carbone,
- les matériaux ferroélectriques,
- les composés organiques photoisomérisables,
- les matériaux à cristaux liquides et
- les xérogels.

4. Dispositif actionneur (10) selon l'une quelconque des revendications précédentes, dans lequel la couche d'actionnement (30) est anisotrope dans au moins une direction et/ou dans lequel la couche d'actionnement (30) présente une matière composite à base de fibres et/ou dans lequel le photo-actionneur (34) est intégré dans la couche d'actionnement (30) dans une matrice, en particulier dans une matrice de résine.

5. Dispositif actionneur (10) selon l'une quelconque des revendications précédentes, dans lequel le composant d'actionneur (20) présente au moins deux couches d'actionnement (30) avec au moins une couche d'excitation (40) respectivement intercalée.

6. Dispositif actionneur (10) selon l'une quelconque des revendications précédentes, dans lequel le composant d'actionnement (20) est mis au point pour appliquer, au moyen de la lumière d'excitation, une force de 10 à 50 newtons par millimètre carré de la surface de section transversale du composant d'actionnement (20), dans lequel la surface de section transversale du composant d'actionnement est perpendiculaire à la direction de prédilection (32).

7. Dispositif actionneur (10) selon l'une quelconque des revendications précédentes,
dans lequel le composant d'actionnement (20) est configuré en tant que composant d'actionnement d'allongement, dans lequel la direction de prédilection (32) est sensiblement perpendiculaire à l'au moins une couche d'actionnement (30), ou
dans lequel le composant d'actionnement (20) est configuré en tant que composant d'actionnement à flexion,
dans lequel la direction de prédilection (32) se trouve sensiblement dans un plan de la couche d'actionnement (30),
dans lequel un rapport de la surface d'actionneur par rapport à un carré d'une longueur de référence du composant d'actionnement (20) se situe en particulier dans une plage de 0,0001 à 0,01 et se situe, en particulier si le composant d'actionnement (20) est configuré en tant que composant d'actionnement à allongement, dans une plage de 0,01 à 1.

8. Dispositif actionneur (10) selon la revendication 7, dans lequel un fonctionnement mécanique pouvant être accompli par le composant d'actionnement (20) se situe dans une plage de 100 à 10 000 joules par mètre cube du volume d'actionneur, dans lequel le fonctionnement mécanique pouvant être accompli par le composant d'actionnement (20) se situe, en particulier si le composant d'actionnement (20) est configuré en tant que composant d'actionnement à allongement, dans une plage de 1 000 à 10 000 joules par mètre cube du volume d'actionneur, ou se situe, si le composant d'actionnement (20) est configuré en tant que composant d'actionnement à flexion, dans une plage de 100 à 1 000 joules par mètre cube du volume d'actionneur.

9. Dispositif actionneur (10) selon l'une quelconque des revendications 7 ou 8, dans lequel le composant d'actionnement (20) est configuré en tant que composant d'actionnement à flexion et est mis au point pour fléchir par excitation de manière perpendiculaire par rapport à un plan de l'au moins une couche d'actionnement (30) et de manière perpendiculaire par rapport à la direction de prédilection (32),
dans lequel un rapport de la hauteur du composant d'actionnement (20) par rapport à une longueur du composant d'actionnement (20) dans la direction de prédilection se situe dans une plage de 0,001 à 0,1, en particulier dans une plage de 0,002 à 0,02,
dans lequel une hauteur du composant d'actionnement (20) se situe de manière perpendiculaire par rapport à un plan de l'au moins une couche d'actionnement (20) en particulier dans une plage de 1 mm à 10 mm, de manière préférée dans une plage de 3 mm à 7 mm et de manière particulièrement préférée d'environ 5 mm.

10. Dispositif actionneur (10) selon l'une quelconque des revendications précédentes, dans lequel la couche d'excitation (40) comprend du verre et/ou du polymère ultra fin, en particulier avec une épaisseur de 20 µm à 100 µm.

11. Dispositif actionneur (10) selon l'une quelconque des revendications précédentes, dans lequel le composant d'actionnement (20) présente une surface réfléchissante (50) qui est mise au point pour réfléchir la lumière d'excitation,
dans lequel la surface réfléchissante (50) entoure au moins en partie le composant d'actionnement (20) sur au moins une surface latérale, en particulier entoure le composant d'actionnement (20) sur le côté de la couche d'excitation (40) qui fait face à la couche d'actionnement (30).

12. Dispositif actionneur (10) selon l'une quelconque des revendications précédentes, dans lequel le guide d'ondes optiques (82) est disposé de manière à introduire de la lumière dans un sens longitudinal (L) dans la couche d'excitation (40), dans lequel le sens longitudinal (L) se situe dans un plan de la couche d'excitation (40), dans lequel le plan de la couche d'excitation (40) est formé par le sens longitudinal (L) et un sens de la largeur (B), dans lequel en particulier
la direction de prédilection (32) correspond, dans le cas où le composant d'actionnement (20) est configuré en tant que composant d'actionnement à flexion, sensiblement au sens longitudinal (L) ou à un sens en divergeant, qui se situe dans un plan de l'au moins une couche d'actionnement (30), ou
la direction de prédilection (32) se trouve, dans le cas où le composant d'actionnement (20) est configuré en tant que composant d'actionnement à allongement, de manière sensiblement perpendiculaire au sens longitudinal (L) et/ou au plan de l'au moins une couche d'actionnement (30).

13. Dispositif actionneur (10) selon l'une quelconque des revendications précédentes, qui présente par ailleurs un cadre de renforcement (200), lequel renferme le composant d'actionnement (20),
dans lequel le cadre de renforcement (200) est disposé de telle manière qu'un allongement de la couche d'actionnement (30) dans la direction de prédilection (32) donne lieu à un tassement du cadre de renforcement (200) de manière perpendiculaire par rapport à la direction de prédilection (32),
dans lequel le cadre de renforcement (200) est mis au point pour la conversion entre le déplacement dans la direction de prédilection (32) et de manière perpendiculaire par rapport à celui-ci.

14. Dispositif actionneur (10) selon l'une quelconque des revendications précédentes, dans lequel la couche d'excitation (40) présente, sur le ou les côtés jouxtant la couche d'actionnement (30), au moins un élément de diffusion (60) pour l'introduction diffuse de lumière d'excitation dans la couche d'actionnement (30), dans lequel l'élément de diffusion (60) comprend en particulier des irrégularités de surface, de préférence des microcavités usinées au laser et/ou gravées.

15. Dispositif actionneur (10) selon l'une quelconque des revendications précédentes, dans lequel la couche d'excitation (40) présente un élément de conversion, qui est mis au point pour transformer de la lumière de la source de lumière (84) en lumière d'excitation, dans lequel la lumière d'excitation présente une autre longueur d'onde et/ou un autre spectre en tant que lumière de la source de lumière (84).

16. Pale de rotor (108) d'une éolienne (100) avec un dispositif actionneur (10) selon l'une quelconque des revendications 1 à 15 et un élément actif (120, 230), dans lequel le dispositif actionneur (10) est mis au point pour commander l'élément actif (120, 230).

17. Pale de rotor selon la revendication 16, dans laquelle
le composant d'actionnement (20) du dispositif actionneur (10) est configuré en tant que composant d'actionnement à flexion et dans lequel
l'élément actif est configuré en tant que servovolet (120), dans lequel
le composant d'actionnement (20) est monté à plat au-dessus de la zone du servovolet (120).

18. Pale de rotor selon la revendication 16, dans laquelle
le composant d'actionnement (20) du dispositif actionneur (10) est configuré en tant que composant d'actionnement à allongement et dans laquelle
l'élément actif est configuré en tant que volet de sustentation (230), dans laquelle
la pale de rotor (108) présente en outre une unité de conversion (200, 210) pour convertir le déplacement du composant d'actionnement (20) en une commande du volet de sustentation (230), dans laquelle en particulier
le dispositif actionneur (10) présente un cadre de renforcement lequel renferme le composant d'actionnement et
l'unité de conversion présente en particulier une tige de poussée/traction pour coupler le cadre de renforcement au volet de sustentation.

19. Eolienne (100) avec une pale de rotor selon l'une quelconque des revendications 16 à 18.

20. Procédé de montage pour monter un dispositif actionneur (10) selon l'une quelconque des revendications 1 à 15 sur une pale de rotor (108) selon l'une quelconque des revendications 16 à 18, dans lequel le procédé comprend une installation du composant d'actionnement (20) sur la pale de rotor (108) et/ou un raccordement du composant de commande (80) au composant d'actionnement (20).
